# EUROPÄISCHE PATENTANMELDUNG

(11) **EP 1 531 410 A1**
(43) Veröffentlichungstag der Anmeldung: **18.05.2005**
(21) Anmeldenummer: 04024410.5
(22) Anmeldetag: 13.10.2004
(51) Int. Cl.: G06F 17/60

(54) **Verfahren zur Bearbeitung mindestens einer Anforderung eines medizinischen Gutes**

(30) Priorität: 30.10.2003 DE 10350962
(71) Anmelder: Deutsche Post AG, 53113 Bonn (DE)
(72) Erfinder: Schildknecht, Susanne, 53179 Bonn (DE); Konstantini, Ferid, 53115 Bonn (DE)
(74) Vertreter: Jostarndt, Hans-Dieter, Dr. Dipl.-Phys.

(57) **Zusammenfassung**

Die Erfindung betrifft ein Verfahren zur Bearbeitung mindestens einer Anforderung eines medizinischen Gutes, wobei das medizinische Gut ein Arzneimittel und/oder ein medizinisches Produkt ist, mit Mitteln zur Überprüfung von Güterbeständen sowie mit Mitteln zum Transport des medizinischen Gutes, wobei die Anforderung mindestens Daten eines Anfordernden und Adressdaten über einen Zielort des Transportes aufweist. Erfindungsgemäß wird eine sichere und effiziente Bereitstellung von angeforderten Arzneimitteln gewährleistet, unter gleichzeitiger Minimierung der am Verfahren beteiligten technischen Prozesse.

Erfindungsgemäß wird die Anforderung erfasst, ein elektronisches Abbild der erfassten Anforderung erzeugt und gespeichert, so dass die erfasste Anforderung und/oder das elektronische Abbild der erfassten Anforderung zur Bestimmung des medizinischen Gutes und ferner zur Identitätsprüfung eines Anfordernden des medizinischen Gutes ausgewertet werden, und dass für den Fall, dass sowohl die Identität des Anfordernden festgestellt werden kann als auch die Bestimmung des medizinischen Gutes möglich ist, eine Überprüfung erfolgt, ob das angeforderte medizinische Gut in einem vorgebbaren Güterbestand eines ersten Lagers vorrätig ist, wobei ein vorrätiges medizinisches Gut zum Transport bereitgestellt wird, und dass das bereitgestellte medizinische Gut und/oder ein elektronisches Abbild des bereitgestellten medizinischen Gutes mit dem elektronischen Abbild der erfassten Anforderung so zusammengeführt werden, dass eine Überprüfung einer Übereinstimmung zwischen dem bereitgestellten medizinischen Gut und dem angeforderten medizinischen Gut ermöglicht wird.

## Beschreibung

### Technisches Gebiet

Die Erfindung betrifft ein Verfahren zur Bearbeitung mindestens einer Anforderung eines medizinischen Gutes, wobei das medizinische Gut ein Arzneimittel und/oder ein medizinisches Produkt ist, mit Mitteln zur Überprüfung von Güterbeständen sowie mit Mitteln zum Transport des medizinischen Gutes, wobei die Anforderung mindestens Daten eines Anfordernden und Adressdaten über einen Zielort des Transportes aufweist.

### Stand der Technik

Die amerikanische Offenlegungsschrift US 2003/0018495 A1 beschreibt eine netzwerkbasierte Vorrichtung zum Austausch von medizinischen Daten. Einzelne Komponenten des Netzwerks stellen Eingabegeräte für medizinisches Personal auf der einen Seite und pharmazeutisch geschultes Personal auf der anderen Seite dar. Insbesondere werden Verfahrensschritte zur Verschlüsselung, Erfassung und Digitalisierung von elektronischen Rezepten beschrieben. Die vom Arzt digital signierten elektronischen Rezepte können wahlweise direkt durch den Arzt oder durch den Patienten in Form einer E-Mail oder in Form eines Direktzugriffs an eine Erfassungsstelle übermittelt werden. Es besteht ferner die Möglichkeit, patientenrelevante Informationen als weiteren Bestandteil des elektronischen Rezepts zu verarbeiten und zu übermitteln. Die ermittelten Daten werden nach erfolgreicher Bearbeitung des Vorgangs verschlüsselt in einem Datenarchiv abgelegt. Das vorgenannte Verfahren sieht voneinander verschiedene Wahlmöglichkeiten vor, die angeforderten Arzneimittel dem Patienten zugänglich zu machen.

Die internationale Patentanmeldung mit der Veröffentlichungsnummer WO 02/29664 A1 beschreibt ein Verfahren zur datenbankbasierten Verknüpfung der Tätigkeiten von Arzt, Apotheker, pharmazeutischer Industrie und Patient. Hierbei werden u. a. vom Arzt angefertigte elektronische Dokumente/Rezepte über ein geeignetes Eingabegerät direkt an einen zentralen Datenserver gesendet. Auf den Datenserver können ferner Patienten und Apotheker zugreifen. Neben den elektronischen Rezepten werden Patientendaten einer Verschreibungsvorgeschichte sowie Krankenverläufe auf dem Datenserver abgebildet.
Die auf dem Datenserver durchgeführten Datenverarbeitungsverfahren erlauben, in Verbindung mit einer weiteren medizinischen Datenbank mögliche Kontraindikationen mit einem verschriebenen Arzneimittel festzustellen und das Ergebnis dem Arzt oder Apotheker zu übermitteln.
Das Serversystem ermöglicht es dem Patienten, über die angeschlossenen Eingabe- und Anzeigegeräte einen ihm genehmen Apotheker an einem Ort seiner Wahl auszuwählen, der über das angeforderte Rezept verfügt. Dort kann der Patient das gewünschte Arzneimittel abholen.

Die vorgenannten Vorrichtungen und Verfahren verbindet das Ziel, medizinische Daten über eine Datenbankstruktur unterschiedlichen Zugriffsstellen zur Weiterverarbeitung verfügbar zu machen. Beispielsweise ermöglichen die vorgenannten Datenbankstrukturen den Angestellten von Krankenversicherungen sowie Managern im Gesundheitswesen, verschiedene Prozesse anhand von Eintragungen neuer Daten in die Datenbank zu verfolgen. Insbesondere sind die Behandlungsund Verschreibungsdaten eines Patienten an sämtlichen Zugriffsstellen durch autorisierte Personen abrufbar.

Die bestehenden Verfahren beschränken sich in ihrer jeweiligen Ausgestaltung auf die Übergabe des elektronischen Rezeptes an Erfassungsstellen zur Weiterverarbeitung. Die Weiterverarbeitung des an den Erfassungsstellen bereitgestellten elektronischen Rezeptes zur Auswahl eines Arzneimittels in Abhängigkeit vom Inhalt des elektronischen Rezeptes wird nicht näher beschrieben.

### Darstellung der Erfindung

Der Erfindung liegt die Aufgabe zugrunde, ein Verfahren zu schaffen, das eine sichere und effiziente Bereitstellung von angeforderten Arzneimitteln gewährleistet, unter gleichzeitiger Minimierung und Zeitoptimierung der am Verfahren beteiligten technischen Prozesse.

Erfindungsgemäß wird diese Aufgabe in Verbindung mit dem Oberbegriff des Patentanspruchs 1 dadurch gelöst, dass die Anforderung erfasst wird, dass ferner ein elektronisches Abbild der erfassten Anforderung erzeugt und gespeichert wird, dass die erfasste Anforderung und/oder das elektronische Abbild der erfassten Anforderung zur Bestimmung des medizinischen Gutes und ferner zur Identitätsprüfung eines Anfordernden des medizinischen Gutes ausgewertet werden, und dass für den Fall, dass sowohl die Identität des Anfordernden festgestellt werden kann als auch die Bestimmung des medizinischen Gutes möglich ist, eine Überprüfung erfolgt, ob das angeforderte medizinische Gut in einem vorgebbaren Güterbestand eines ersten Lagers vorrätig ist, wobei ein vorrätiges medizinisches Gut zum Transport bereitgestellt wird, und dass das bereitgestellte medizinische Gut und/oder ein elektronisches Abbild des bereitgestellten medizinischen Gutes mit dem elektronischen Abbild der erfassten Anforderung so zusammengeführt werden, dass eine Überprüfung einer Übereinstimmung zwischen dem bereitgestellten medizinischen Gut und dem angeforderten medizinischen Gut ermöglicht wird.

Bei einer Vielzahl von zu behandelnden Personen handelt es sich um chronisch Kranke, die regelmäßig und in der Regel im Voraus planbare Arzneimittel benötigen. Entsprechend den konventionellen Verfahren ist diese Personengruppe regelmäßig dazu aufgefordert, die benötigten Arzneimittel von einer Apotheke abzuholen. Das erfindungsgemäße Verfahren ermöglicht einem Dienstleister eine überprüfte Bereitstellung von angeforderten medizinischen Gütern zum Transport, so dass der Transport von medizinischen Gütern arzneimittel- und apothekengerecht ermöglicht wird. Hierdurch unterbleibt eine Entgegennahme von Arzneimitteln bei Apotheken die keinen Versand von Arzneimitteln vornehmen. Vielmehr wird erfindungsgemäß der Transport von angeforderten medizinischen Gütern zum vom Anfordernden bestimmbaren Zielort ermöglicht.

Die dargestellte Apotheke ist in einer besonders bevorzugten Ausführungsform der Erfindung eine Versandapotheke. Der Begriff "Versandapotheke" umfasst alle Apotheken, die einen Versand von Arzneimitteln vornehmen.

Ferner weist die erfindungsgemäße Bearbeitung der Arzneimittelanforderung zur Ausgabe des angeforderten Arzneimittels eine Reihe weiterer Vorteile auf, die im Folgenden dargelegt werden.

Handelt es sich bei dem angeforderten Gut um mindestens einen Wirkstoff ist das angeforderte Arzneimittel anhand seines bzw. seiner Wirkstoffe beschrieben. Erfindungsgemäß erfolgt eine Auswahl des Arzneimittels auf Grund der angeforderten Wirkstoffe. Die Anforderung eines Wirkstoffs weist keine Angaben über einen vorgeschriebenen Hersteller auf. Sollte mehr als ein Arzneimittel, welches die angeforderten Wirkstoffe enthält, vorliegen, wird vorzugsweise das preislich günstigere Arzneimittel ausgewählt. Es hat sich als besonders vorteilhaft erwiesen, bei Vorhandensein mehrerer Arzneimittel nach Möglichkeit ein Generikum auszuwählen.
Im Falle einer vorgeschriebenen Arzneimittelanforderung erfolgt die Auswahl des Arzneimittels ausschließlich anhand des vorgeschriebenen Arzneimittels sowie anhand des vorgeschriebenen Herstellers. Liegt ferner ein aut idem Merkmal der Anforderung vor, kann das angeforderte Arzneimittel durch ein anderes Arzneimittel ersetzt werden. Vorzugsweise liegt die Zustimmung des Anfordernden zum Ersatz des Arzneimittels vor. Der Ersatz des angeforderten Arzneimittels wird vorzugsweise dann vorgenommen, wenn zum Zeitpunkt der Anforderung kein positiver Bestand im ersten Lager vorrätig ist und/oder wenn ein Generikum preislich günstiger ist.

Erfindungsgemäß wird eine datensichere Bearbeitung der Anforderung während aller auf die Erfassung der Anforderung anschließenden Verfahrensschritte gewährleistet. Die Erfassung besteht wahlweise aus einer Entgegennahme von schriftlichen Rezepten und/oder schriftlichen Bestellungen und einer unter Umständen in Verbindung stehenden Freilegung des Rezeptes und/oder der schriftlichen Bestellungen aus einer, eine Datensicherheit gegenüber Dritten garantierenden, Verpackungseinheit. Beispiele für solche Verpackungseinheiten sind Briefumschläge, Postpakete sowie versiegelte Behälter.

Ferner wird eine Anforderung, die in Form eines elektronischen Rezeptes (eRezept) vorliegt, erfasst. Vorzugsweise ist das eRezept ein Informationsbestandteil einer Krankenkassenkarte, wobei das Verfahren auch von anderen Datenträgern Gebrauch macht. Beispielsweise ist das eRezept auf einer Diskette, einer CD-ROM, einem DAT oder einem Memorystick gespeichert.

Vorzugsweise wird das eRezept vom Computer eines verschreibenden Arztes oder vom Computer des Anfordernden elektronisch übersendet.

Anfordernde sind sowohl gesetzlich (GKV) als auch privat (PKV) versicherte Personen. Zudem erfolgt erfindungsgemäß eine Aufteilung der Anforderungen in verschreibungspflichtige und nicht verschreibungspflichtige Anforderungen. Wahlweise findet eine weitere Aufteilung der Anforderung statt. Mittels dieser weiteren Aufteilung wird die Anforderung einer Apotheke zugewiesen.

Im Anschluss an die Erfassung der Anforderung wird die Anforderung elektronisch abgebildet und steht somit im abgebildeten Original mindestens einer Auswerteeinheit über mindestens eine Datenleitung zur Verfügung.
Erfindungsgemäß können verschiedenste Datenleitungen verwendet werden, wobei es sich als besonders zweckmäßig erwiesen hat, koaxiale Leitungen, RS232 oder RS485 Leitungen einzusetzen.

Vorteilhafterweise verfügt das erfindungsgemäße Verfahren über ein Mittel für einen Datenaustausch mit einem Computernetzwerk.

Der Begriff "Computer" ist dabei in keiner Weise einschränkend zu verstehen. Es kann sich hierbei um eine beliebige, zur Durchführung von Berechnungen geeignete Einheit handeln, beispielsweise eine Workstation, einen Personalcomputer, einen Mikrocomputer oder eine zur Durchführung von Berechnungen und/oder Vergleichen geeignete Schaltung.

Das Computernetzwerk ist als ein offenes Massennetzwerk von *"Gateway"*-Rechnern zu verstehen, die strukturell durch ein einheitliches Adressenschema sowie physisch über die Datenleitungen verbunden sind. Ein besonders vorteilhaftes Computernetzwerk ist das Internet.

Die Anbindung an das Computernetzwerk kann mittels eines weiteren Netzwerks, beispielsweise ein "Local Area Network (LAN)", erfolgen, wobei vorzugsweise unter einem LAN ein Datenübertragungsnetzwerk zu verstehen ist, das räumlich begrenzt den Informationsaustausch über einen Datenserver ermöglicht. Ein typisches LAN ist das *"Ethernet",* das auf dem Bus-Prinzip arbeitet.

Die elektronische Abbildung der erfassten Anforderung erfolgt mittels geeigneter Eingabegeräte, die aus einem analogen Signal ein elektronisches Signal erzeugen können. Ferner beinhaltet die elektronische Abbildung eine Übernahme der elektronischen Signale eines eRezeptes. Hierbei ist sinngemäß keine Erzeugung des elektrischen Signals aus einem analogen Signal erforderlich. Vielmehr werden die elektronischen Signale des eRezeptes elektronisch abgebildet.

Unter elektronischen Signalen sind auch Abfolgen an digitalen Signaleinheiten, wie beispielsweise Bits zu verstehen. Zweckmäßige Eingabegeräte zur Erzeugung von elektronischen Signalen aus analogen Signalen sind Handscanner, Schwarzweiß-Flachbettscanner, Einzugscanner, Farb-Flachbettscanner, Dia- oder Filmscanner sowie Trommelscanner. Insbesondere die Verwendung von Trommelscannern hat sich infolge einer flexiblen Aufsichtvorlage sowie einer flexiblen Durchsichtvorlage als äußerst zweckmäßig erwiesen. Darüber hinaus finden digitale Bildwandler zur Erzeugung des elektronischen Abbildes Anwendung. Beispielsweise werden Kameras mit CCD- (Charge Coupled Device) Chip verwendet, deren hohe spektrale Empfindlichkeit eine abbildungsgetreue Repräsentation der erfassten Anforderung ermöglicht.

Das elektronische Abbild wird nachfolgend mit einer digitalen Signatur versehen. Ein bekanntes Verfahren zur Erzeugung digitaler Signaturen wird von der Deutschen Post AG unter der Bezeichnung "Signtrust" angeboten. Vorzugsweise wird ein Verfahren, das in der Deutschen Patentanmeldungschrift DE 101 34 682 A1 beschrieben wird, zur Erzeugung digitaler Signaturen verwendet.

Eine andere, gleichfalls vorteilhafte Ausführungsform der Erfindung sieht eine Erstellung fälschungssicherer Datensätze anhand eines Geheimnisses vor, das nur von einer Prüfungsstelle entschlüsselt werden kann. Ein derartiges Verfahren ist in der deutschen Patentschrift DE 100 20 563 C2 dargestellt. Diese Druckschrift betrifft ein Verfahren zur Erstellung fälschungssicherer Dokumente unter Einsatz eines Sicherungsmoduls, wobei das Sicherungsmodul ein temporäres Geheimnis erzeugt, das einem Dokumenthersteller nicht zur Kenntnis gelangt, wobei das temporäre Geheimnis zusammen mit Informationen, die Auskunft über die Identität des Sicherungsmoduls geben, verschlüsselt an eine Bescheinigungsstelle übergeben wird, wobei eine Bescheinigungsstelle das temporäre Geheimnis entschlüsselt, die Identität des Sicherungsmoduls erkennt und das temporäre Geheimnis zusammen mit weiteren Informationen derart verschlüsselt, dass nur eine Prüfstelle eine Entschlüsselung vornehmen kann und an den Dokumenthersteller übermittelt, wobei der Dokumenthersteller eigene Daten, die in das Dokument eingebracht werden, dem Sicherungsmodul übergibt, wobei das Sicherungsmodul die selbst vom Dokumenthersteller eingebrachten Daten in einer Weise mit dem temporären Geheimnis irreversibel verknüpft, dass ausschließlich bei wiederholter Verknüpfung derselben Daten in derselben Weise ein identisches Ergebnis entstehen kann, wobei keine Rückschlüsse auf das temporäre Geheimnis möglich sind. Dieses Verfahren erhöht die Datensicherheit dadurch, dass das Ergebnis der irreversiblen Verknüpfung der von dem Dokumenthersteller eingebrachten Daten und dem temporären Geheimnis in das Dokument übernommen wird.

In der Patentschrift DE 100 20 561 C2 wird ein besonders geeignetes Sicherungsmodul zur Durchführung des in der Patentschrift DE 100 20 563 C2 dargestellten Verfahrens offenbart.

Die digitale Signatur ermöglicht fortfolgend eine effiziente Erkennung des Verfahrensstandes des elektronischen Abbildes innerhalb der anschließenden erfindungsgemäßen Verfahrensschritte. Auch Nachbearbeitungen des elektronischen Abbildes lassen sich somit signieren.

Im Anschluss an die elektronische Abbildung der Anforderung wird das elektronische Abbild der Anforderung gespeichert. Erfindungsgemäß kommen flüchtige und/oder nicht-flüchtige Speichergeräte zur Speicherung der elektronischen Abbilder zum Einsatz. Beispielsweise werden Festplatten, CD- oder DVD-Brenner, Bandsicherungseinheiten, Speicherkarten oder Speichermodule wie SmartMedia Karten, USB-Sticks und Compact Flash eingesetzt.

Ferner werden erfindungsgemäß die erfasste Anforderung und/oder das elektronische Abbild der erfassten Anforderung zur Bestimmung des medizinischen Gutes und ferner zur Identitätsprüfung eines Anfordernden des medizinischen Gutes ausgewertet. Vorteilhafterweise werden alle Informationen der erfassten Anforderung und/oder des elektronischen Abbildes ausgewertet.

Zur Auswertung werden beispielsweise ICR ("Intelligent Character Recognition") Verfahren, OMR (Optical Mark Recognition) Verfahren oder ähnliche Verfahren eingesetzt. Es ist ein Bestandteil der Erfindung zur Auswertung der erfassten Anforderungen und/oder des elektronischen Abbildes geeignete Auswertemittel einzusetzen, wodurch sich beispielsweise Auswertegeschwindigkeiten von 7.500 Belege DIN A4 pro Stunde ergeben.

Durch die Auswertung wird eine eindeutige Wiedergabe des Inhaltes der Anforderung gewährleistet. Zur Bestimmung des medizinischen Gutes anhand des ausgewerteten Inhaltes der Anforderung steht eine medizinische Datenbank zur Verfügung, wobei die medizinische Datenbank Einträge über sämtliche registrierte Arzneimittel aufweist. Stimmt der wiedergegebene Inhalt der Anforderung mit mindestens einem der Einträge der medizinischen Datenbank überein, ist das medizinische Gut bestimmt. Stimmt der wiedergegebene Inhalt der Anforderung nicht mit einem Eintrag der medizinischen Datenbank überein, überprüft ein Softwareagent eines Apothekers den wiedergegebenen Inhalt der Anforderung im Vergleich zur erfassten Anforderung zur Bestimmung des medizinischen Gutes. Ist auch mittels des Softwareagenten keine Bestimmung des medizinischen Gutes möglich, ist das medizinische Gut unbestimmt. Im Falle der Überprüfung durch einen Softwareagenten des Apothekers wird das elektronische Abbild digital signiert.

In einer weniger vorteilhaften Ausführungsform tritt ein Apotheker an Stelle des Softwareagenten des Apothekers.

Softwareagenten, die auch als intelligente Agenten bezeichnet werden, werden vorzugsweise durch Softwareeinheiten gebildet, welche ihre Umwelt überwachen und nach Bedarf automatisch handeln. Im dargestellten Fall handelt der Softwareagent für einen Apotheker. Ferner handelt erfindungsgemäß ein Softwareagent für den Anfordernden.

Darüber hinaus steht erfindungsgemäß eine Bearbeitungseinheit über das Computernetzwerk und den Datenleitungen mit den Mitteln zur Erfassung der Anforderung, mit den Mitteln zur Erzeugung eines elektronischen Abbildes der erfassten Anforderung, den Mitteln zur Speicherung des elektronischen Abbildes, den Mitteln zur Auswertung der erfassten Anforderungen und/oder der elektronischen Abbilder der erfassten Anforderungen, den Mitteln zur Überprüfung des Güterbestandes, den Mitteln zur Bereitstellung des medizinischen Gutes, den Mitteln zum Transport des medizinischen Gutes und den Mitteln zur Ermöglichung der Überprüfung der Übereinstimmung des bereitgestellten medizinischen Gutes mit dem angeforderten medizinischen Gut in Verbindung.

Die Auswertung der erfassten Anforderung und/oder des elektronischen Abbildes der erfassten Anforderung beinhaltet ferner die Überprüfung der Identität des Anfordernden sowie die Identität des verschreibenden Arztes. Hierzu wird der wiedergegebene Inhalt der Anforderung mit Einträgen einer Adressdatenbank und/oder mit Einträgen einer Zulassungsliste der Ärzte verglichen. Stimmt der wiedergegebene Inhalt der Anforderung mit mindestens einem der Einträge der Adressdatenbank und/oder der Zulassungsliste der Ärzte überein, sind die Identität des Anfordernden und/oder die Zulassung des verschreibenden Arztes festgestellt. Stimmt der wiedergegebene Inhalt der Anforderung nicht mit einem Eintrag der Adressdatenbank und/oder der Zulassungsliste der Ärzte überein, sind die Identität des Anfordernden und/oder die Zulassung des verschreibenden Arztes nicht festgestellt.

Ferner erfolgt erfindungsgemäß eine Überprüfung des Alters der Anforderung. Im Falle von Anforderungen, die vom Ausstellungsdatum gerechnet älter als 30 Tage sind, legt der Softwareagent des verschreibenden Arztes fest, ob die Anforderung weiterverarbeitet wird, oder ob der Anfordernde über ein Ausbleiben der Weiterverarbeitung informiert wird.

Es hat sich ferner als besonders zweckmäßig erwiesen, eine Bonität des Anfordernden zu prüfen. Die Bonität ist ein Maßstab für die Kreditwürdigkeit des Anfordernden. Beispielsweise ergeben sich negative Bonitätsvermerke durch ein negatives Ergebnis der Kreditwürdigkeit durch Abfrage einer externen Datenbank oder im Falle einer falschen Bankverbindung oder im Falle von zuvor dokumentierten unregelmäßigen Zahlungen durch den Anfordernden. Ferner wird vorzugsweise die Pünktlichkeit der Zahlung ausgewertet, so dass bei Unpünktlichkeit der Zahlung der negative Bonitätsvermerk erzeugt wird.
Positive Bonitätsvermerke liegen dann vor, falls die vorgenannten Gründe, die zu einem negativen Bonitätsvermerk führen, nicht vorliegen.

Informationen der Anforderung sowie Ergebnisse der erfindungsgemäßen Auswertungen und Überprüfungen werden in einer Kundendatei abgelegt, wobei die nach erstmaliger Registrierung der Informationen des Anfordernden zu jedem Zeitpunkt verfügbare Kundendatei pro Anfordernden vorzugsweise mehrere der folgenden Eintragungen beinhaltet:
- Kundennummer
- Bestellnummer
- Adressdaten
- Einverständniserklärung vom Anfordernden zur Registrierung von Daten über den Anfordernden und medizinischen Daten
- Adressdaten über den Zielort des Transports
- Angaben über eine bevollmächtigte Person zur Entgegennahme der Ware
- persönliche Daten (z. B. Geburtsdatum und Geschlecht),
- Angaben zur Bonität
- Angaben zum Zahlungsverkehr (z. B. Kontoverbindung, Kreditkartennummer)
- Erteilung einer Einzugsermächtigung (geregeltes Lastschriftverfahren),
- Angaben zur Art der Versicherung sowie damit in Verbindung stehende Kontaktadressen
- Kostenträger, mit Kennung, Anschrift und Kontaktdaten
- Angaben über den Hausarzt und weitere behandelnde Ärzte mit Zulassungsinformationen, Namen, Anschrift, Kontaktdaten
- medikamentöse Vorgeschichte
- Patientennummer
- Versicherungsnummer
- Kontakthistorie
- Historie der Medikation

Ein Kostenträger ist eine Krankenkasse oder der Anfordernde. Bekannte Arten der Krankenversicherung sind gesetzlich oder private Krankenversicherungen.

Der Anfordernde kann eine erteilte Einzugsermächtigung jederzeit widerrufen. Die Kontoverbindung sowie die Gültigkeit des Kontos werden elektronisch geprüft, beispielsweise mittels internetbasierter Onlinedienste.

Es hat sich als besonders vorteilhaft erwiesen, die Adressdaten des Zielortes des Transportes zu überprüfen. Ein negatives Ergebnis einer Prüfung einer Ortsqualität ergibt sich, falls beispielsweise der Transport zum Zielort gefährdet erscheint. Im Falle des negativen Ergebnisses der Prüfung der Ortsqualität, muss zur Erteilung der weiteren Bearbeitung der Anforderung des medizinischen Gutes der Softwareagent des Apothekers kontaktiert werden. Im Falle eines positiven Ergebnisses der Prüfung der Ortsqualität wird der Transport zum Zielort als unkritisch angesehen und es ist keine Erteilung durch den Softwareagenten des Apothekers erforderlich.

Für den Fall, dass sowohl die Identität des Anfordernden festgestellt werden kann, als auch die Bestimmung des medizinischen Gutes möglich ist, erfolgt der Abgleich mit einer weiteren Datenbank, die einen Abruf einer Verschreibungsvorgeschichte, welche Informationen über medizinische Wirkungen von zuvor angeforderten medizinischen Gütern des Anfordernden enthält, erlaubt. Die Informationen der Verschreibungsvorgeschichte werden zur Anzeige von Kontraindikationen von Arzneimitteln verwendet.

Vorteilhafterweise werden die medizinischen Wirkungen des angeforderten medizinische Gutes mit den medizinischen Wirkungen des zuvor angeforderten und noch vom Anfordernden konsumierten medizinischen Gutes oder eines nicht mehr konsumierten medizinischen Gutes mit Langzeitwirkung verglichen, um somit einen Nachweis einer medikamentösen Kontraindikation zu erbringen.

Erfindungsgemäß unterbleibt die Bereitstellung von medizinischen Gütern, die auf fehlerhafte Verschreibungen durch den verschreibenden Arzt zurückgehen, was Gesundheitsrisiken durch falsche Arzneimittel minimiert.

Oftmals ergeben sich unvorteilhafte Kontraindikationen in Wechselwirkung mit anderen zuvor verabreichten Arzneimitteln, die im Einzelfall nicht unmittelbar durch den Arzt erkannt werden können, da zur ihrer Erkennung eine vollständige Auflistung der zum Patienten gehörigen Verschreibungsakte vorliegen muss. Gerade die vollständige Verschreibungsakte ist beispielsweise bei Konsultation von mehr als einem verschreibenden Arzt nicht unbedingt gewährleistet. Durch den Vergleich der medizinischen Wirkungen mittels der weiteren Datenbank wird dieses Problem erfindungsgemäß verhindert.

Die Auswertung ermöglicht ferner die Darstellung des elektronischen Abbildes auf der graphischen Benutzeroberfläche.
Unter graphischer Benutzeroberfläche ist hierbei jegliches Mittel zur Verwertung und Repräsentation von elektronischen Informationen zu verstehen. Als besonders vorteilhaft haben sich Mittel wie Monitore, Laserbeamer, graphische Displays sowie Geräte basierend auf Elektronenstrahlenanregung erwiesen.

Ein weiterer Überprüfungsschritt ist eine Ermittlung eines Preises der Anforderung zur Prüfung einer Kostenübernahme. Zweckmäßigerweise wird die Preisermittlung flexibel ausgelegt, so dass der ermittelte Preis jederzeit an Preisfestlegungen adaptiert werden kann.

Ferner wird nach erfolgter Kommissionierung des medizinischen Gutes ein Transportpreis ermittelt. Die Höhe des Transportpreises richtet sich beispielsweise nach einer gewählten Verpackungsart und nach einem gewählten Transportweg des medizinischen Gutes.

Für den Fall, dass sowohl die Identität des Anfordernden festgestellt werden kann, als auch die Bestimmung des medizinischen Gutes möglich ist, erfolgt die Überprüfung, ob das angeforderte medizinische Gut in einem vorgebbaren Güterbestand des ersten Lagers vorrätig ist.

Liegt das aut idem Merkmal der Anforderung vor, kann das angeforderte Arzneimittel durch ein anderes Arzneimittel ersetzt werden. Der Ersatz des angeforderten Arzneimittels wird vorzugsweise dann vorgenommen, wenn zum Zeitpunkt der Anforderung kein positiver Bestand im ersten Lager vorrätig ist und/oder wenn das Generikum preislich günstiger ist.

Im Sinne der Erfindung ist das Lager wahlweise eine feste räumliche Anordnung oder eine mobile Einheit, wobei die mobile Einheit durch ein geeignetes Mittel in einem dauerhaften Kontakt zum Computernetzwerk steht. Beispielsweise verfügt die mobile Einheit über Mittel zur Übertragung von elektromagnetische Wellen, mittels derer eine Informationsübertragung zwischen der mobilen Einheit und dem Computernetzwerk ermöglicht wird. Zur Gewährleistung einer Datensicherheit werden wahlweise klassische Kryptographieverfahren mittels einer Übersetzungsvorschrift sowie Quantenkryptographieverfahren eingesetzt. Ferner werden symmetrische Verschlüsselungsverfahren wie "Single-Key", "Private-Key" sowie "Secret-Key" eingesetzt.
Erfindungsgemäß wird das erste Lager durch ein Mittel zur Ausführung logistischer Vorgänge verwaltet, so dass eine Logistik bereitgestellt wird.

Der vorgebbare Güterbestand richtet sich zweckmäßigerweise nach den bereits zuvor angeforderten medizinischen Gütern.

An die Überprüfung des Güterbestandes anschließend wird überprüft, ob ein echtes oder unechtes Factoring vorliegt. Bei echtem Factoring übernimmt der Dienstleister das Risiko eines Forderungsausfalls. Unechtes Factoring liegt vor, wenn der Apotheker das Risiko des Forderungsausfalls, die durch Nichtzahlen durch den Anfordernden entstanden sind, übernimmt.

Vorzugsweise erfolgt aufgrund von elektronisch bereitgestellten Versandpapieren eine Auswahl der Verpackungsart des medizinischen Gutes. Die Verpackungsart wird hierbei spezifischen Charakteristika des medizinischen Gutes angepasst. Beispielsweise werden thermolabile Arzneimittel in Verpackungen, deren Innenräume eine vorgeschriebene Temperatur einhalten, transportiert. Die Verpackung des medizinischen Gutes erfolgt durch ein Mittel zu Verpackung von Stückgütern.

Erfindungsgemäß wird das vorrätige medizinische Gut zum Transport bereitgestellt. Ein Bestandteil der Bereitstellung ist eine Kommissionierung des vorrätigen medizinischen Gutes. Zur Kommissionierung übermittelt eine Lagerverwaltungssteuereinheit mittels des Computernetzwerkes Anforderungsdaten an einen Materialflusssteuerungsrechner, so dass ein Güterflusssteuerungsrechner Fahrziele von Kommissionierbehältern derart steuert, dass die Kommissionierbehälter in Kommissionierbereiche transportiert werden, in denen sich die zum Transport bereitzustellenden medizinischen Güter befinden. Der Materialflusssteuerungsrechner sendet Aktivierungsinformationen an einen Steuerungsrechner, wobei der Steuerungsrechner eine Anzeigensteuerung in Abhängigkeit von den Aktivierungsinformationen vornimmt. Der Steuerungsrechner übernimmt hierbei eine speicherprogrammierbare Steuerung der Anzeigen zur Darstellung von Betriebszuständen.

Ferner sendet der Steuerungsrechner unter Berücksichtigung der erhaltenen Aktivierungsinformationen Quittierungsinformationen an den Güterflusssteuerungsrechner, wobei der Steuerungsrechner die erhaltenen Daten der Anforderung mit Informationen über Lagerorte in den Kommissionierbereichen verknüpft und durch die Verknüpfung die Kommissionierbereiche anzeigt, in denen sich zum Transport bereitzustellenden Güter befinden.

Ferner kann der Steuerungsrechner Einträge einer Datenbank des Güterflussteuerungsrechners ändern. Hierbei ist es besonders vorteilhaft, dass der Steuerungsrechner die Änderungen der Eintragungen in der Datenbank des Güterflusssteuerungsrechners in Abhängigkeit von den Quittierungsinformationen vornimmt.

Das bereitgestellte medizinische Gut und/oder ein elektronisches Abbild des bereitgestellten medizinischen Gutes werden mit dem elektronischen Abbild der erfassten Anforderung so zusammengeführt, dass die Überprüfung einer Übereinstimmung zwischen dem bereitgestellten medizinischen Gut und dem angeforderten medizinischen Gut ermöglicht wird. Im Falle einer Übereinstimmung des bereitgestellten medizinischen Gutes mit dem angeforderten medizinischen Gut wird das elektronische Abbild wiederum digital signiert.

Vorzugsweise wird das elektronische Abbild des bereitgestellten medizinischen Gutes mit einem digitalen Bildwandler erzeugt. Darüber hinaus wird wahlweise ein analoges Eingabegerät verwendet, welches analoge Signale, und somit ein analoges Abbild des medizinischen Gutes erzeugt, wobei die analogen Signale im Anschluss an die Erzeugung durch einen analog/digital Wandler (AD-Wandler) in elektronische Signale gewandelt wird. Die elektronischen Signale stellen das elektronische Abbild dar.

Durch die Ermöglichung der Überprüfung der Übereinstimmung des bereitgestellten medizinischen Gutes mit dem angeforderten medizinischen Gut wird gewährleistet, dass immer nur das angeforderte medizinische Gut transportiert wird. Ferner kann eine Qualitätskontrolle des bereitgestellten medizinischen Gutes ermöglicht werden.

Bestandteil der Qualitätskontrolle ist eine Überprüfungen/Dokumentation einer Haltbarkeit anhand eines auf dem medizinischen Gut befindlichen Haltbarkeitsdatums sowie eine Überprüfungen/Dokumentation einer Chargennummer. Ferner erfolgt eine Überprüfung auf einen Verpackungszustand. Beispielsweise können somit unsachgemäße Verpackungen oder zerstörte Güter nachgewiesen werden.

Vorteilhafte Weiterbildungen des Verfahrens sind Gegenstand der Ansprüche 2 bis 10.

In einem besonders bevorzugten Ausführungsbeispiel erfolgt im Falle der Übereinstimmung zwischen dem bereitgestellten medizinischen Gut und dem angeforderten medizinischen Gut der Transport des bereitgestellten medizinischen Gutes zum Zielort. Hierdurch wird zweckmäßigerweise der Transport von medizinischen Gütern, die nicht mit der Anforderung übereinstimmen, vermieden und somit unterbleiben Fehltransporte von Gütern zum Zielort. Die Auswirkungen eines Fehltransportes können mitunter erheblich sein, da der Anfordernde unter Umständen dringend auf das ursprünglich angeforderte Gut angewiesen ist. Vorteilhafterweise wird ein anforderungsgerechter Transport vorgenommen, so dass eine erhöhte Planungssicherheit für den Anfordernden bei der Anforderung von medizinischen Gütern resultiert. Anforderungsgerechte Transporte sind beispielsweise notwendig bei thermolabilen Gütern.

Es ist besonders zweckmäßig, eine Kostenabrechnung erst bei gegebener Übereinstimmung zwischen dem bereitgestellten medizinischen Gut und dem angeforderten medizinischen Gut erfolgen zu lassen, um somit die Kostenabrechnung zu optimieren. Durch das vorgenannte Vorgehen werden die entstandenen Kosten immer dann abgerechnet, wenn das angeforderte Gut zum Transport bereitsteht, so dass nur das übereinstimmende medizinische Gut abgerechnet wird.

In einer weiteren bevorzugten Ausführungsform werden zur Kostenabrechnung das elektronische Abbild der erfassten Anforderung sowie eine Bestätigung des begonnenen Transportes an ein Mittel zur Finanz- und Debitorenbuchhaltung übermittelt.

Ferner hat es sich als besonders zweckmäßig erwiesen, dass das elektronische Abbild der erfassten Anforderung und/oder das elektronische Abbild des bereitgestellten medizinischen Gutes mit mindestens einer digitalen Signatur versehen werden. Hierdurch lässt sich auch nach einer erfolgten Überprüfung der Übereinstimmung ein eindeutiger Zusammenhang zwischen dem elektronischen Abbild der erfassten Anforderung und dem elektronischen Abbild des bereitgestellten medizinischen Gutes herstellen.

In einer weiteren besonders bevorzugten Ausführungsform erfolgt bei der Anforderung von mehr als einem medizinischen Gut die Überprüfung, ob das medizinische Gut im vorgebbaren Güterbestand des ersten Lagers vorrätig ist, für jedes angeforderte medizinische Gut. Die vorrätigen angeforderten medizinischen Güter werden anschließend zum Transport bereitgestellt. Diese Ausgestaltung erlaubt einen Teiltransport von medizinischen Gütern. Vorteilhafterweise können medizinische Güter mit einem kurzen Haltbarkeitsdatum bereits transportiert werden, auch wenn nicht alle angeforderten Güter zum Transport bereitstehen.

In einer weiteren Ausführungsform führt die Überprüfung des Güterbestandes des ersten Lagers zu einer Bestellung eines medizinischen Gutes, so dass der Transport des bestellten medizinischen Gutes von einem Zentrallager zum ersten Lager ausgelöst wird.

Vorzugsweise gehört das Zentrallager zu einem Herstellungssystem eines Herstellers und/oder eines Großhändlers von medizinischen Gütern. Im Bedarfsfall hat es sich als zweckmäßig erwiesen, wahlweise Informationen über den Hersteller und das Herstellungssystem elektronisch und/oder schriftlich an den Anfordernden zu übersenden. Die Übersendung kann mittels des Computernetzwerkes, automatisiert per Telefon oder postalisch erfolgen.

Mittels einer weiteren Qualitätskontrolle durch den Softwareagenten des Apothekers der im ersten Lager befindlichen medizinischen Güter erfolgt eine Überprüfung einer korrekten Zuordnung der Güter im Lager. Ein weiterer Bestandteil der weiteren Qualitätskontrolle ist eine Überprüfung der vom Zentrallager zum ersten Lager transportierten medizinischen Güter. Hierzu wird beispielsweise eine Ansammlung von bestellten und zum ersten Lager transportierten identischen Gütern anhand der Bestellung verglichen.

In einer bevorzugten Ausführungsform wird ein Rücktransport vom Zielort zum ersten Lager im Falle eines negativen Ergebnisses einer Annahmekontrolle des Anfordernden ausgelöst. Damit der Rücktransport im Sinne des erfindungsgemäßen Verfahrens zu Recht erfolgt, müssen vom Dienstleister und/oder vom Apotheker festgelegte Kontrollkriterien nicht erfüllt sein. Im Falle, dass mindestens ein Kontrollkriterium nicht erfüllt ist, ergibt sich ein negatives Ergebnis. Beispiele für Kontrollkriterien sind eine Unversehrtheit des transportierten medizinischen Gutes, ein Bestand des medizinischen Gutes, die Übereinstimmung zwischen dem transportierten medizinischen Gut und dem angeforderten medizinischen Gut sowie eine Liquidität des Anfordernden. Erfolgte der Rücktransport zu Recht, besteht für den Anfordernden im Falle von nicht verschriebenen Arzneimitteln die Möglichkeit anzugeben, ob er eine Gutschrift oder einen Umtausch des medizinischen Gutes wünscht.

Vom Anfordernden festgelegte Kontrollkriterien, die nicht mit den vom Dienstleister und/oder vom Apotheker festgelegten Kontrollkriterien übereinstimmen, können auch zu einem negativen Ergebnis führen, welches den Rücktransport auslöst, allerdings erfolgt der Rücktransport unter diesen Umständen zu Unrecht. Beispielsweise erfolgt der Rücktransport aufgrund einer verweigerten Annahme durch den Anfordernden zu Unrecht.

Eine weitere Ausführungsform der Erfindung sieht vor, dass nach erfolgtem Rücktransport des medizinischen Gutes eine Überprüfung ausgelöst wird, wobei mittels des rücktransportierten medizinischen Gutes überprüft wird, ob der Rücktransport zu Recht erfolgte.

In einer weiteren Ausführungsform wird ein Aufenthaltsort des medizinischen Gutes durch eine Abfrage eines Identifikationscodes bestimmt.
Zur Sendungsverfolgung des medizinischen Gutes während des Transportes zum Zielort werden das medizinische Gut und/oder die Verpackung des Gutes mit dem Identifikationscode versehen, wobei der Identifikationscode durch ein Auslesemittel einer Auswerteeinheit zugeführt wird. Die Ausleseeinheit steht wahlweise mit dem Computernetzwerk in direkter Verbindung. Zweckmäßigerweise kann die Ausleseeinheit optional an das Computernetzwerk angeschlossen werden, obgleich eine Funktionsfähigkeit der Ausleseeinheit nicht durch das Computernetzwerk bestimmt wird.

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Figuren.

### Beschreibung der Zeichnung

Die Figuren stellen jeweils einzelne Verfahrensschritte der Erfindung zur Bearbeitung der Anforderung eines medizinischen Gutes anhand von Ablaufdiagrammen dar. Zur Vereinfachung wurden willkürlich drei von einander zu unterscheidende Symbolformen gewählt: die rechteckförmigen Symbole repräsentieren Funktionen des Verfahrens während die rautenförmigen Symbole Ergebnisse der Funktionen darstellen. Ovale Symbole repräsentieren zum einen die Bearbeitungseinheit 5000 und zum anderen den Softwareagenten des Apothekers 7000. Ferner repräsentieren die umkreisten ∧ und ∨ Symbole logische UND-Verknüpfungen beziehungsweise logische ODER-Verknüpfungen. Bei dem umkreisten × Symbol handelt es sich ferner um die Repräsentation einer disjunkten Verknüpfung. Von den Figuren zeigt:
- Figur 1: Die Bereiche der Erfassung der Anforderung, der Erzeugung des elektronischen Abbildes der erfassten Anforderung, der Identitätsprüfung zu der auch eine Ermittlung der Adresse des Anfordernden gehört.
- Figur 2: Die Bestimmung des medizinischen Gutes, die Prüfung der Kostenübernahme sowie die Festlegung des Transportweges.
- Figur 3: Die Prüfung des Güterbestandes sowie die Schritte zur Bereitstellung vorrätiger medizinischer Güter.
- Figur 4: Die Güterbestandsprüfung sowie Kommissionierung medizinischer Güter.
- Figur 5: Die Überprüfung der Berechtigung zum Rücktransport.
- Figur 6: Gesamtübersicht des Ausführungsbeispiels.

Die im Folgenden dargestellten Schritte beziehen sich auf ein bevorzugtes Ausführungsbeispiel zur Bearbeitung von Anforderungen in Form von schriftlichen Rezepten und/oder schriftlichen Bestellungen.

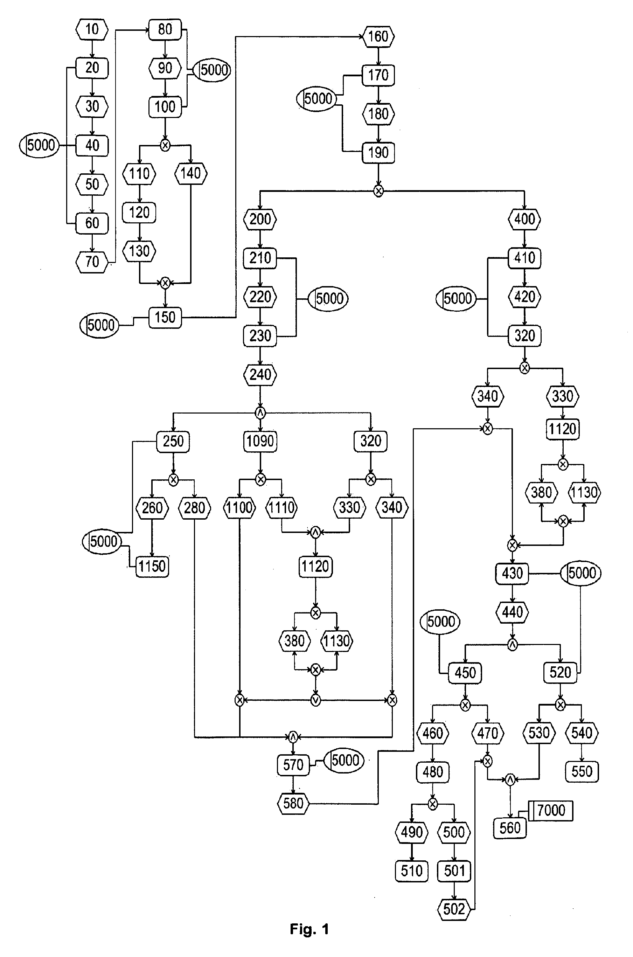

In Figur 1 bezeichnet Schritt 10 den Eingang der Verpackungseinheit innerhalb derer sich die Anforderung befindet. Die eingegangene Verpackungseinheit wird einer Apotheke zugeordnet 20. Nach erfolgter Zuordnung 30, wird die Anforderung freigelegt 40. Die freigelegte Anforderung 50 wird wiederum nach Anfordernden sortiert 60.

Die sortierte Anforderung 70 wird elektronisch abgebildet 80. Liegt ein elektronisches Abbild vor 90, wird letzteres anschließend mittels ICR oder OMR automatisch ausgewertet 100.

An die automatische Auswertung der elektronisch abgebildeten Anforderung 140 schließt sich eine phonetische Überprüfung 150 an. Hierbei werden beispielsweise ein Name und die Adresse des Anfordernden phonetisch überprüft.

Zur phonetischen Überprüfung 150 wird jeder Bestandteil des elektronischen Abbildes mit Bestandteilen von vorherigen elektronischen Abbildern manuell und/oder automatisch verglichen. Falls beispielsweise bereits pro Bestandteil des überprüften elektronischen Abbildes eine Mehrzahl identischer Bestandteile bereits erfasster elektronischer Abbilder vorliegt, werden weitere Bestandteile des elektronischen Abbildes verglichen, so dass eine eindeutige Zuordnung eines jeden Bestandteiles des elektronischen Abbildes erfolgt. Hieraus ergibt sich der eindeutig wiedergegebene Inhalt der Anforderung.

Führt der Verfahrensschritt 100 zu einer unvollständigen oder zu gar keiner Auswertung des elektronischen Abbildes 110, wird das elektronische Abbild 90 durch den Softwareagenten des Apothekers 7000, der vorzugsweise ein Bestandteil der Bearbeitungseinheit 5000 ist, ausgewertet 120. Hieraus ergibt sich der eindeutig wiedergegebene Inhalt der Anforderung, und somit anschließend die Bestimmung des medizinischen Gutes. Nach erfolgter Auswertung 130 erfolgt auch in diesem Fall die phonetische Überprüfung 150.

In einer besonders bevorzugten Ausführungsform führt die Bearbeitungseinheit 5000 die Verfahrensschritte 20, 40, 60, 80, 100, 120, 150 aus. Mittels der somit erzielten Zentralisierung der Verfahrensausführung werden die einzelnen Schritte prozess- und zeitgerecht durchgeführt. Ferner steht die Bearbeitungseinheit 5000 zur Bestimmung des medizinischen Gutes mit der medizinischen Datenbank sowie der Adressdatenbank in Verbindung. Als besonders vorteilhaft hat es sich erwiesen, die Bearbeitungseinheit 5000 mit der Kundendatei zu verbinden.

Für den Fall, dass die phonetische Überprüfung 150 beendet ist 160, schließt sich in Verbindung mit der Bearbeitungseinheit 5000 ein Dublettencheck 170 an. Funktion des Dublettenchecks 170 ist ein Nachweis, ob das vorliegende elektronische Abbild und/oder die Daten des Anfordernden bereits vorliegen.

Das nicht bereits zuvor abgebildete elektronische Abbild 180 wird in einem nächsten Schritt zur Identifikation 190 des Anfordernden herangezogen und zur Ermittlung des Zielortes des Transportes. Kann der wiedergegebene Inhalt einem Eintrag der Adressdatenbank zugewiesen werden 400, findet durch die Bearbeitungseinheit 5000 eine inhaltliche Überprüfung 410 der erfassten Adressdaten und/oder des erfassten Zielortes sowie eine Ermittlung von Abweichungen der Adresse des Zielortes, wobei die ermittelte Abweichung dokumentiert wird, statt. Der ermittelte abweichende Zielort bestimmt den Zielort des Transportes des medizinischen Gutes. Im Anschluss 420 an die inhaltliche Überprüfung 410 wird die Ortsqualität der Adresse des Zielortes geprüft 320. Hierzu wird der ermittelte Zielort mit bereits erfassten Ortsangaben verglichen, wobei ermittelt wird, ob die weitere Bearbeitung der Anforderung des medizinischen Gutes einer Erteilung unterliegt.

Für den Fall eines negativen Ergebnisses 330 der Prüfung der Ortsqualität 320 muss die weitere Bearbeitung der Anforderung des medizinischen Gutes erteilt werden. Zur Erteilung wird der Softwareagent des Apothekers kontaktiert 1120. Falls ein positives Ergebnis der Prüfung der Ortsqualität 320 vorliegt, ist keine Erteilung durch den Softwareagenten des Apothekers notwendig.

In einer weiteren Ausführungsform erfolgt im Falle einer verweigerten Erteilung eine Eintragung eines Vermerkes in die Kundendatei und die Bearbeitung der Anforderung wird abgebrochen.

Für den Fall, dass nach erfolgter Prüfung der Ortsqualität 320 keine Erteilung durch den Softwareagenten des Apothekers 7000 erforderlich ist 340, werden die Daten des Anfordernden sowie die Daten des angeforderten medizinischen Gutes der Bestellnummer zugewiesen 430.

Die Erteilung der weiteren Bearbeitung der Anforderung kann wahlweise ohne Auflage 1130 oder unter der Auflage, dass das medizinische Gut nur per Nachnahme abgerechnet wird 380, erfolgen. Erfolgt die Erteilung unter Auflage wird ein Vermerk an das Mittel zur Finanz- und Debitorenbuchhaltung gesendet. Anschließend an die Verfahrensschritte 1130 oder 380 wird der Verfahrensschritt 430 gewählt.

Nach erfolgter Zuweisung der Daten des Anfordernden sowie der Daten des angeforderten medizinischen Gutes 440 erfolgt mittels der Bearbeitungseinheit 5000 die Überprüfung des Alters der Anforderung 450 und die Überprüfung, ob der verschreibende Arzt auf der Zulassungsliste eingetragen ist 520.

Erst wenn das überprüfte Alter der Anforderung vom Ausstellungsdatum gerechnet jünger als 30 Tage - 470 - und gleichzeitig der verschreibende Arzt auf der Zulassungsliste aufgeführt ist 530, findet eine Identifizierung des medizinischen Gutes 560 statt.

Im Falle, dass der Arzt nicht in der Zulassungsliste eingetragen ist 540, wird die Anforderung mit einem Begleitschreiben an den Anfordernden zurückgeschickt und die Bearbeitung der Anforderung wird abgebrochen 550.

Ist die Anforderung vom Ausstellungsdatum gerechnet älter als 30 Tage, wird der Softwareagent des verschreibenden Arztes zur Festlegung des weiteren Vorgehens kontaktiert 480. Der Softwareagent des verschreibenden Arztes legt fest, ob die Anforderung weiterverarbeitet wird, oder ob der Anfordernde über ein Ausbleiben der Weiterverarbeitung informiert wird.
Erteilt der Softwareagent des verschreibenden Arztes eine Freigabe 500, kann die Anforderung dann weiterverarbeitet werden, wenn gleichzeitig der verschreibende Arzt auf der Zulassungsliste aufgeführt ist 530. Im Falle der Freigabe 500, wird die erteilte Freigabe durch eine digitale Signatur auf dem elektronischen Abbild vermerkt 501. Erst im Anschluss an den erfolgten Vermerk 502, wird das Verfahren fortgesetzt.

Erteilt der Softwareagent keine Freigabe 490, wird die Anforderung mit einem Begleitschreiben an den Anfordernden zurückgeschickt und die Bearbeitung der Anforderung wird abgebrochen 510.

Kann der wiedergegebene Inhalt einem Eintrag der Adressdatenbank nicht zugewiesen werden 200, übernimmt die Bearbeitungseinheit 5000 eine Datenpflege der Kundendatei zur Neuanlage 210 der Daten des Anfordernden. Die Adressdaten der neu angelegten Daten des Anfordernden 220 werden durch eine weitere Adressdatenbank verifiziert, wobei die weitere Adressdatenbank alle bekannten Adressen in Einzugsgebieten der bei der Bearbeitung von Anforderungen beteiligten Apotheken beinhaltet. Zweckmäßigerweise steht die weitere Adressdatenbank in Verbindung mit der Bearbeitungseinheit 5000. Ferner wird ermittelt, ob die erfassten Adressdaten von der Adresse des Zielortes abweichen.

An die Verifikation der Adressdaten und/oder die Verifikation der abweichenden Adressdaten 240 anschließend wird die Ortsqualität geprüft 320. Im Falle des negativen Ergebnisses 330 der Prüfung der Ortsqualität, muss zur Erteilung der weiteren Bearbeitung der Anforderung des medizinischen Gutes der Softwareagent des Apothekers kontaktiert werden 1120.

In einer weiteren Ausführungsform erfolgt im Falle einer verweigerten Erteilung die Eintragung des Vermerkes in die Kundendatei, und die Bearbeitung der Anforderung wird abgebrochen.

Die Erteilung der weiteren Bearbeitung der Anforderung kann wahlweise ohne Auflage 1130 oder unter der Auflage, dass das medizinische Gut nur per Nachnahme abgerechnet wird 380, erfolgen. Erfolgt die Erteilung unter Auflage wird ein Vermerk an das Mittel zur Finanz- und Debitorenbuchhaltung gesendet.

Neben der Verifikation der Adressdaten 240 wird die Bonität des Anfordernden überprüft 1090. Erfolgt aufgrund einer einfachen Bonitätsprüfung der einfache negative Bonitätsvermerk 1110, wird der Softwareagent des Apothekers zur Erteilung kontaktiert 1120 und entsprechend den vorgenannten Schritten weiterverfahren.

In einer weiteren Ausführungsform erfolgt im Falle des einfachen negativen Bonitätsvermerkes die Eintragung des Vermerkes in die Kundendatei und die Bearbeitung der Anforderung wird abgebrochen.

Ein weiterer Verfahrensschritt nach der Verifikation der Adressdaten 240 ist eine Überprüfung 250, ob der Anfordernde mit den allgemeinen Geschäftsbedingungen (AGB) einverstanden ist. Im Falle, dass der Anfordernde nicht mit den AGB's einverstanden ist 260, wird die Bearbeitung der Anforderung abgebrochen 1150.

In einer weiteren Ausführungsform erfolgt im Falle des Verfahrensschrittes 260 eine Eintragung eines Vermerkes in die Kundendatei.

Eine Ermittlung der Kunden- und Bestellnummer 570 wird nur dann ausgeführt, wenn der Kunde mit den AGB's einverstanden 280 ist und der einfache positive Bonitätsvermerk 1100 vorliegt, oder anstelle des einfachen positiven Bonitätsvermerkes 1100 die Erteilung der weiteren Bearbeitung der Anforderung entweder mit Auflage 380 oder ohne Auflage 1130 erfolgte und das positive Ergebnis 340 der Prüfung der Ortsqualität vorliegt, oder anstelle des positiven Ergebnisses 340 der Prüfung der Ortsqualität die Erteilung der weiteren Bearbeitung der Anforderung entweder mit Auflage 380 oder ohne Auflage 1130 erfolgt.

Vorzugsweise werden die Verfahrensschritte 250, 1150 sowie 570 durch die Bearbeitungseinheit 5000 ausgeführt.

Im Anschluss 580 an die Ermittlung der Kunden- und Bestellnummer 570 werden zur Fortsetzung der Bearbeitung der Anforderung der Verfahrensschritt 430, die Zuweisung der Daten des Anfordernden sowie die Daten des angeforderten medizinischen Gutes zu der Bestellnummer, sowie die an 430 anknüpfenden Verfahrensschritte ausgeführt.

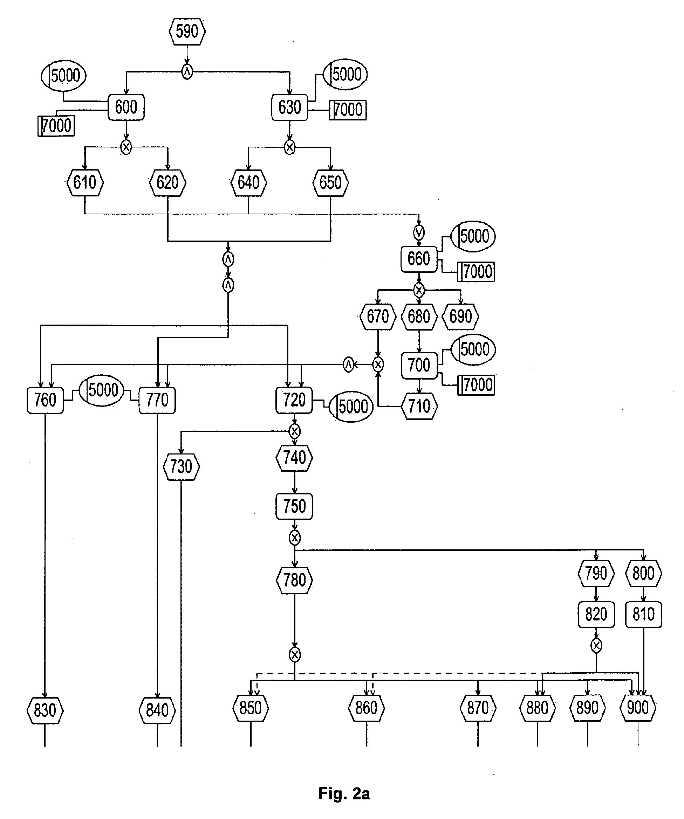

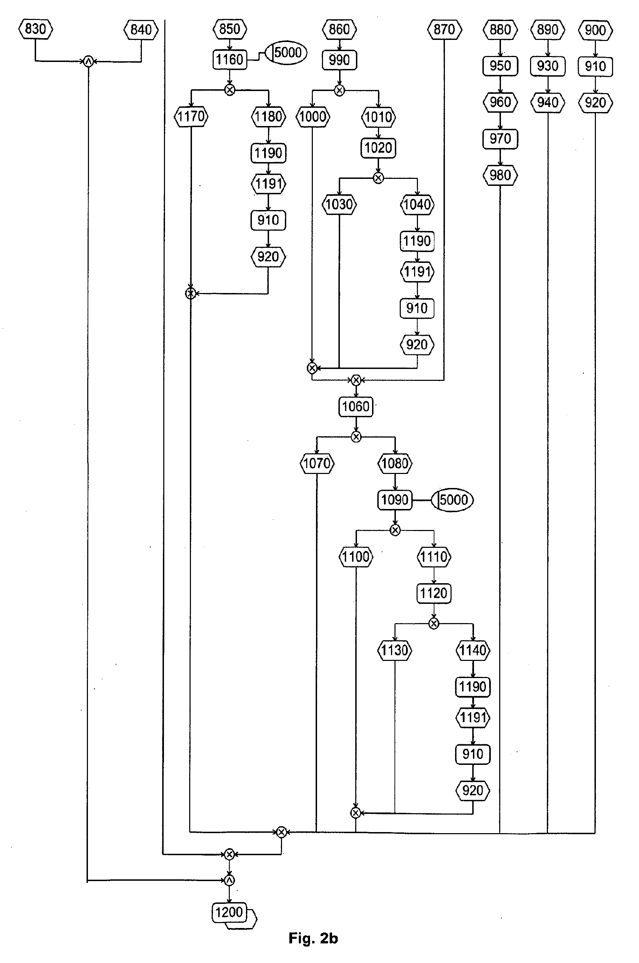

In Figur 2 bezeichnet Schritt 590 eine erfolgte Identifizierung des medizinischen Gutes. Im Anschluss an den Verfahrensschritt 590 wird eine Plausibilität des identifizierten medizinischen Gutes anhand der Kundendatei 600 und anhand der Anforderung 630 überprüft. Die Überprüfungen werden von der Bearbeitungseinheit 5000 in Verbindung mit dem Softwareagenten des Apothekers 7000 ausgeführt.

Für den Fall, dass sowohl die Identifizierung des medizinischen Gutes anhand der Kundendatei 620 sowie anhand der Anforderung 650 plausibel ist, werden die Kostenübernahme 720, der Transportweg des medizinischen Gutes 770 und der Preis des medizinischen Gutes 760 durch die Bearbeitungseinheit 5000 ermittelt.

Sollte die Identifizierung des medizinischen Gutes anhand der Kundendatei 610 oder anhand der Anforderung 640 unplausibel sein, wird der Softwareagent des verschreibenden Arztes oder der Softwareagent des Anfordernden kontaktiert 660. Die Kontaktierung erfolgt durch die Bearbeitungseinheit in Verbindung mit dem Softwareagenten des Apothekers 7000.

Die Kontaktierung des Softwareagenten des verschreibenden Arztes oder des Anfordernden resultiert in eins von drei von einander verschiedenen Ergebnissen. Im Falle des ersten Ergebnisses wird die weitere Bearbeitung der Anforderung des medizinischen Gutes abgebrochen 690. Im Falle des zweiten Ergebnisses sind Änderungen am elektronischen Abbild erforderlich 680. Die Änderungen am elektronischen Abbild 700 erfolgen durch die Bearbeitungseinheit 5000 in Verbindung mit dem Softwareagenten 7000, wobei das geänderte elektronische Abbild digital signiert wird. Das dritte Ergebnis ist die unveränderte Weiterbehandlung des elektronischen Abbildes 670. Entweder das unveränderte digitale Abbild 670 oder das veränderte digital signierte Abbild 710 werden im weiteren Verlauf des Verfahrens zur Ermittlung der Kostenübernahme 720, zur Ermittlung des Transportweges 770 und zur Ermittlung des Preises 760 des medizinischen Gutes herangezogen.

Der ermittelte Preis des medizinischen Gutes 830 und der ermittelte Transportweg 840 sind zur Auftragsbearbeitung 1200 notwendig.

Zur Ermittlung der Kostenübernahme wird geprüft, ob der Anfordernde die Kosten übernimmt. Übernimmt der Anfordernde die Kosten nicht 730, übernimmt die gesetzliche Krankenversicherung die Kosten, und als folgender Verfahrensschritt wird die Auftragsbearbeitung 1200 gewählt. Übernimmt der Anfordernde die Kosten oder einen Teil der Kosten 740, erfolgt eine Ermittlung des Zahlungsweges 750. Die Ermittlung des Zahlungsweges teilt sich vorzugsweise in drei weitere Verfahrensschritte auf.

Für den Fall, dass kein Mahn- oder Inkassoverfahren 780 vorliegt, wird anschließend geprüft, welcher Zahlungsweg gewählt wird. Beispielsweise wird geprüft, ob die Zahlung per Kreditkarte 850, per Lastschrift 860, per Rechnung 870, per Vorauskasse 880, per Scheck oder Bargeld 890, oder per Nachnahme 900 erfolgen soll.

Für den Fall, dass ein Mahn- oder Inkassoverfahren 790 vorliegt, erfolgt eine Entscheidung über den Zahlungsweg 820. Hierbei wird festgelegt, ob die Zahlung entweder per Vorauskasse 880 oder per Nachnahme 900 erfolgen soll. In einer weiteren bevorzugten Ausführungsform wird wahlweise festgelegt, ob die Zahlung entweder per Kreditkarte 850 oder per Lastschrift 860 erfolgen soll.

Für den Fall, dass bei der Ermittlung des Zahlungsweges das negative Ergebnis der Ortsprüfung oder der einfache negative Bonitätsvermerk vorliegen 800, wird die Zahlung per Nachnahme 810 eingeleitet. Infolge der Einleitung der Nachnahmezahlung 810 wird der Verfahrensschritt 900 gewählt.

Wurde die Zahlung per Kreditkarte 850 ermittelt, übernimmt die Bearbeitungseinheit 5000 eine Überprüfung einer Kreditkarte 1160 des Anfordernden. Im Falle einer ungültigen Kreditkarte 1180 wird die Zahlung per Nachnahme 1190 eingeleitet. Nach erfolgter Einleitung 1191 wird eine Nachnahmeberechnung 910 durchgeführt. Nach Abschluss der Nachnahmeberechnung 920 ergibt sich als folgender Verfahrensschritt die Auftragsbearbeitung 1200.

In einer weiteren Ausführungsform erfolgt im Falle einer ungültigen Kreditkarte die Eintragung des Vermerkes in die Kundendatei, und die Bearbeitung der Anforderung wird abgebrochen.

Im Falle einer gültigen Kreditkarte 1170 ist der folgende Verfahrensschritt die Auftragsbearbeitung 1200.

Wurde die Zahlung durch Lastschriftverfahren 860 ermittelt, wird zunächst die Kontoverbindung des Anfordernden überprüft 990. Ist die Kontoverbindung nicht zur Zahlung geeignet 1010, wird der Softwareagent des Anfordernden kontaktiert 1020. Ergibt sich aufgrund des Kontaktes zum Softwareagenten des Anfordernden keine zur Zahlung geeignete Kontoverbindung 1040, wird die Zahlung per Nachnahme 1190 eingeleitet. Nach erfolgter Einleitung 1191 wird eine Nachnahmeberechnung 910 durchgeführt. Nach Abschluss der Nachnahmeberechnung 920 ergibt sich als folgender Verfahrensschritt die Auftragsbearbeitung 1200.

In einer weiteren Ausführungsform erfolgt im Falle einer zur Zahlung ungeeigneten Kontoverbindung die Eintragung des Vermerkes in die Kundendatei und die Bearbeitung der Anforderung wird abgebrochen.

Ergibt sich jedoch aufgrund des Kontaktes zum Softwareagenten des Anfordernden eine zur Zahlung geeignete Kontoverbindung 1030, wird selbige in die Kundendatei aufgenommen und der Rechnungsbetrag 1060 ermittelt.
Ist die überprüfte Kontoverbindung zur Zahlung geeignet 1000, wird direkt der Rechnungsbetrag 1060 ermittelt.

Wurde die Zahlung per Rechnung 870 ermittelt, wird wiederum direkt der Rechnungsbetrag 1060 ermittelt.
Liegt der ermittelte Rechnungsbetrag unter einem Wert x 1070, wobei x beispielsweise ein Wert zwischen 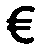 0,- und 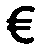 500,- ist, ist der folgende Verfahrensschritt die Auftragsbearbeitung 1200.
Ist der ermittelte Rechnungsbetrag gleich oder größer als der Wert x 1080, wird das Ergebnis einer qualifizierten Bonitätsprüfung durch die Bearbeitungseinheit 5000 eingeholt 1090. Im Falle des qualifizierten positiven Bonitätsvermerkes 1100 ist der folgende Verfahrensschritt die Auftragsbearbeitung 1200. Im Falle des qualifizierten negativen Bonitätsvermerkes 1110 wird zur Erteilung einer weiteren Bearbeitung der Softwareagent des Apothekers kontaktiert 1120. Erfolgt keine Erteilung 1140, wird die Zahlung per Nachnahme 1190 eingeleitet. Nach erfolgter Einleitung 1191 wird eine Nachnahmeberechnung 910 durchgeführt. Nach Abschluss der Nachnahmeberechnung 920 ergibt sich als folgender Verfahrensschritt die Auftragsbearbeitung 1200.

In einer weiteren Ausführungsform erfolgt im Falle, dass keine Erteilung ausgegeben wird, die Eintragung des Vermerkes in die Kundendatei, und die Bearbeitung der Anforderung wird abgebrochen.

Im Falle der Erteilung 1130, ist der folgende Verfahrensschritt die Auftragsbearbeitung 1200.

Wurde die Zahlung per Vorauskasse 880 ermittelt, wird die Erstellung einer Briefrechnung veranlasst 950. Die erstellte Briefrechnung wird dem Anfordernden zur Begleichung der Rechnung zugestellt 960. Das Verfahren wird solange unterbrochen 970, bis ein Zahlungseingang 980 erfolgte. Erst im Anschluss an den Zahlungseingang 980 schließt sich als folgender Verfahrensschritt die Auftragsbearbeitung 1200 an.

Wurde die Zahlung per Scheck oder Bargeld 890 ermittelt, wird das Verfahren solange unterbrochen 930, bis der Zahlungseingang 940 auf ein Kundenkonto verbucht werden konnte. Erst im Anschluss an den Zahlungseingang 940 schließt sich als folgender Verfahrensschritt die Auftragsbearbeitung 1200 an.

Wurde die Zahlung per Nachnahme 900 ermittelt, wird die Nachnahmeberechnung 910 durchgeführt. Erst nach durchgeführter Nachnahmeberechnung 920, schließt sich als folgender Verfahrensschritt die Auftragsbearbeitung 1200 an.

Die Auftragsbearbeitung 1200 erfolgt nur dann, wenn der ermittelte Preis des medizinischen Gutes 830 und der ermittelte Transportweg 840 und einer der vorgenannten Verfahrensschritte 1170, 1070, 1100, 1130, 980, 940, oder 920 vorliegen.

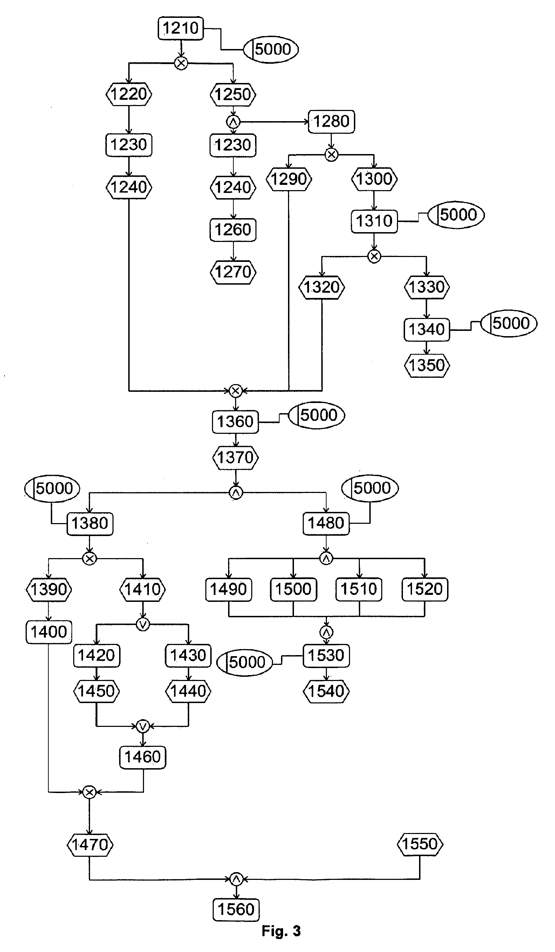

Aus Figur 3 gehen die Verfahrensabläufe zur Prüfung des Güterbestandes sowie zur Bereitstellung vorrätiger medizinischer Güter hervor.

Die Auftragsbearbeitung 1200 beginnt mittels der Bearbeitungseinheit 5000 mit dem Verfahrensschritt 1210, der Überprüfung des Güterbestandes. Ist das angeforderte medizinische Gut im Güterbestand des ersten Lagers vorrätig 1220, wird eine Bestandsreservierung 1230 des Gutes eingeleitet. Nach erfolgter Bestandsreservierung 1240 gliedert sich als folgender Verfahrensschritt eine Ermittlung, ob echtes oder unechtes Factoring vorliegt 1360.

Ist das angeforderte medizinische Gut nicht vollständig im Güterbestand des ersten Lagers vorrätig 1250, wird die Reservierung des vorrätigen Teiles des Gutes im Bestand eingeleitet 1230. Nach erfolgter Reservierung des vorrätigen Teiles des Gutes im Bestand 1240 wird eine Übermittlung von Informationen über die erfolgte Reservierung des vorrätigen Gutes an den Softwareagenten des Versandapothekers eingeleitet 1260. Die erfolgte Übermittlung der Informationen an den Softwareagenten des Versandapothekers wird durch den Verfahrensschritt 1270 repräsentiert.

Zudem wird der wiedergegebene Inhalt der Anforderung auf das Vorliegen des aut Idem Merkmals geprüft 1280. Liegt das aut Idem Merkmal vor und kann dem Inhalt der Anforderung ein Einverständnisvermerk des Anfordernden zum Erhalt des alternativen Arzneimittels entnommen werden 1290, gliedert sich als folgender Verfahrensschritt die Ermittlung des echten oder unechten Factorings 1360 an.
Im Falle, dass keine Einverständniserklärung des Anfordernden vorliegt 1300, kontaktiert die Bearbeitungseinheit 5000 den Softwareagenten des Apothekers 1310 zur Klärung, ob der Transport des vorrätigen Teils des angeforderten medizinischen Gutes erfolgen soll.

Im Falle, dass der Softwareagent des Apothekers festlegt, dass der Transport des vorrätigen Teils des angeforderten medizinischen Gutes erfolgt 1320, gliedert sich als folgender Verfahrensschritt die Ermittlung des echten oder unechten Factorings 1360 an.
Im Falle, dass der Softwareagent des Apothekers festlegt, dass der Transport des vorrätigen Teils des angeforderten medizinischen Gutes nicht erfolgt 1330, erwirkt die Bearbeitungseinheit eine Zurückstellung des reservierten vorrätigen Gutes bis das angeforderte medizinische Gut vollständig vorliegt 1340. Ferner wird der Softwareagent des Anfordernden über die Zurückstellung informiert.

Erst nachdem das angeforderte medizinische Gut vollständig vorliegt gliedert sich als folgender Verfahrensschritt die Ermittlung des echten oder unechten Factorings 1360 an.

Die Ermittlung des echten oder unechten Factorings 1360 erfolgt mittels der Bearbeitungseinheit 5000. Nach der Ermittelung 1370, ob echtes oder unechtes Factoring vorliegt, werden Abrechnungsunterlagen 1380 und Versandpapiere 1480 elektronisch vorbereitet. Hierzu wird wiederum die Bearbeitungseinheit 5000 eingesetzt. Durch die elektronische Vorbereitung der Versandpapiere werden das elektronische Abbild 1490, eine Aufstellung des ermittelten Preises des medizinischen Gutes 1500, Lieferscheine und gegebenenfalls die Rechnung 1510 sowie ein Aufkleber pro medizinischem Gut 1520 elektronisch zusammengestellt. Im Anschluss hieran wird durch die Bearbeitungseinheit 5000 eine Übersendung der elektronisch vorbereiteten Versandpapiere an die Apotheke eingeleitet 1530. Die Übersendung ist mit dem Verfahrensschritt 1540 abgeschlossen.

Die elektronische Vorbereitung der Abrechnungsunterlagen 1380 unterteilt sich je nachdem, ob der Anfordernde gesetzlich 1410 oder privat 1390 versichert ist. Im Falle, dass der Anfordernde privat versichert ist, wird eine elektronische Gesamtrechnung erstellt 1400, so dass die Rechnung elektronisch vorbereitet vorliegt 1470. Für einen Anfordernden, der gesetzlich versichert ist, wird die Rechnung wahlweise in einen Eigenanteil 1420 und/oder in einen Kassenteil 1430 gegliedert. Die elektronisch vorbereiteten Rechnungsteile 1450 und 1440 werden gegebenenfalls zusammengestellt 1460, so dass auch im Falle des gesetzlich versicherten Anfordernden die Rechnung elektronisch vollständig vorbereitet vorliegt 1470. Sollte eine Freigabe von der Logistik 1550 und die elektronisch vollständig vorbereitete Rechnung vorliegen, wird die Rechnung an das Mittel zur Finanz- und Debitorenbuchhaltung zur Abrechnung gesendet.

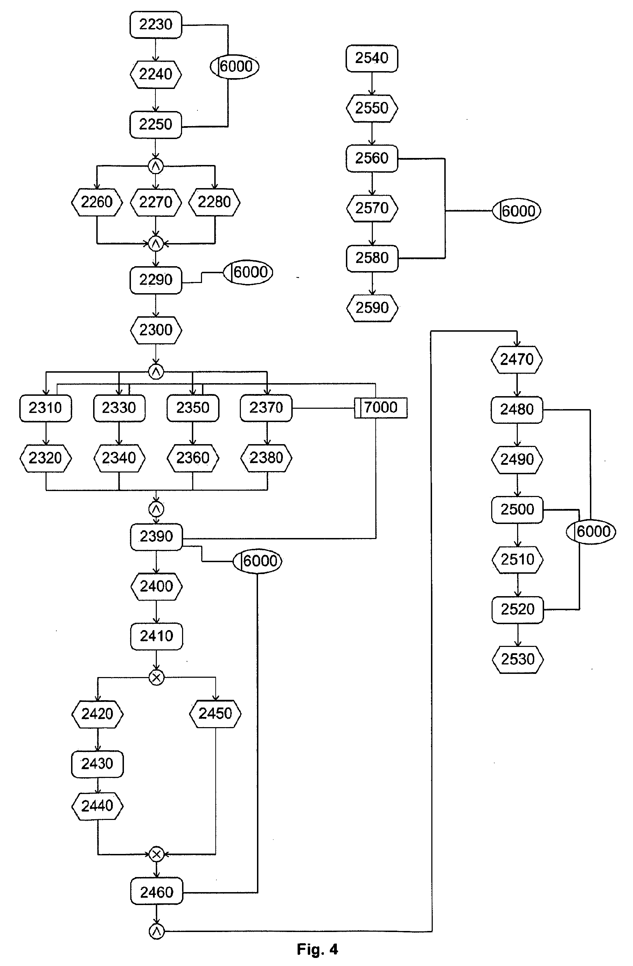

Aus Figur 4 lassen sich die Verfahrensschritte zur Güterbestandsprüfung sowie zur Kommissionierung des medizinischen Gutes entnehmen.

Die elektronischen Versandpapiere 2230 werden durch den Softwareagenten des Apothekers 7000 in Empfang genommen 2240, so dass eine Auftragsvorbereitung beginnt 2250. Die Kommissionierung 2290 und somit die Bereitstellung des angeforderten medizinischen Gutes wird erst dann durchgeführt, wenn zuvor die Versandpapiere gedruckt 2260, die Logistik aktiviert 2270 und die Verpackungsart ermittelt 2280 wurden. Die Versandpapiere werden dem kommissionierten Gut beigefügt.
Erfolgte die Kommissionierung 2300, werden verfahrensgemäß eine weitere Überprüfung des elektronischen Abbildes der erfassten Anforderung 2310, eine Überprüfung des gegebenenfalls geänderten elektronischen Abbildes 2330, eine Überprüfung der Preisermittlung 2350 und die Überprüfung der Übereinstimmung zwischen dem bereitgestellten medizinischen Gut und dem angeforderten medizinischen Gut 2370 ermöglicht.
Erfolgte zweckmäßigerweise durch den Softwareagenten des Apothekers 7000 die weitere Überprüfung des elektronischen Abbildes der erfassten Anforderung 2320, die Überprüfung des gegebenenfalls geänderten elektronischen Abbildes 2340, die Überprüfung der Preisermittlung 2360 und die Überprüfung der Übereinstimmung zwischen dem bereitgestellten medizinischen Gut und dem angeforderten medizinischen Gut 2380 und wurden ferner die vorgenannten Überprüfungen durch den Softwareagenten autorisiert, werden die elektronischen Abbilder digital signiert 2390. Falls mindestens einer der vorgenannten Verfahrensschritte 2320, 2340, 2360 und 2380 nicht durch den Softwareagenten des Apothekers 7000 autorisiert wird, erfolgt der Abbruch der Bearbeitung der Anforderung. In einer weiteren Ausführungsform wird eine Nachbearbeitung des den Abbruch verursachenden Verfahrensschrittes vorgenommen, so dass im Anschluss an die Nachbearbeitung eine Fortsetzung der Bearbeitung ermöglicht wird.

Nach erfolgter digitaler Signatur 2400 findet eine weitere Ermittlung der Art der Krankenversicherung des Anfordernden statt 2410. Im Falle eines privat versicherten Anfordernden 2420 wird das elektronische Abbild der Anforderung ausgedruckt und dem kommissionierten Gut beigefügt.

Nachdem das Abbild ausgedruckt wurde 2440, wird durch den Softwareagenten des Apothekers 7000 eine Nachricht zur Abrechnung an das Mittel zur Finanzund Debitorenbuchhaltung und an das Mittel zur Verpackung von Stückgütern gesendet 2460.

Im Falle eines gesetzlich versicherten Anfordernden 2450 wird unmittelbar Verfahrensschritt 2460 ausgeführt.

Die gesendete Nachricht zur Abrechnung 2470 aktiviert das Mittel zur Verpackung 2480. Die medizinischen Güter werden daraufhin verpackt 2490 und der Transportpreis ermittelt 2500. Der ermittelte Transportpreis 2510 wird zur Abrechnung mit einem Transporteur 2520 herangezogen, so dass auf der Grundlage des Transportpreises die Abrechnung mit dem Transporteur erfolgt 2530. In einer besonders bevorzugten Ausführungsform tritt der Dienstleister an die Stelle des Transporteurs.
Die Verfahrensschritte 2480, 2500 sowie 2520 unterliegen dem Softwareagenten des Apothekers 7000.

Ein weiterer Bestandteil des Verfahrens ist die Übernahme der Qualitätskontrolle 2560. Wird ein medizinisches Gut vom Zentrallager zum ersten Lager geliefert 2550 erfolgt die Qualitätskontrolle 2560 des medizinischen Gutes durch den Softwareagenten des Apothekers 7000. Nach erfolgter Qualitätskontrolle 2570 wird die Lagerung des medizinischen Gutes im ersten Lager ausgelöst 2580, so dass eine dauerhafte Lagerung ermöglicht wird 2590.

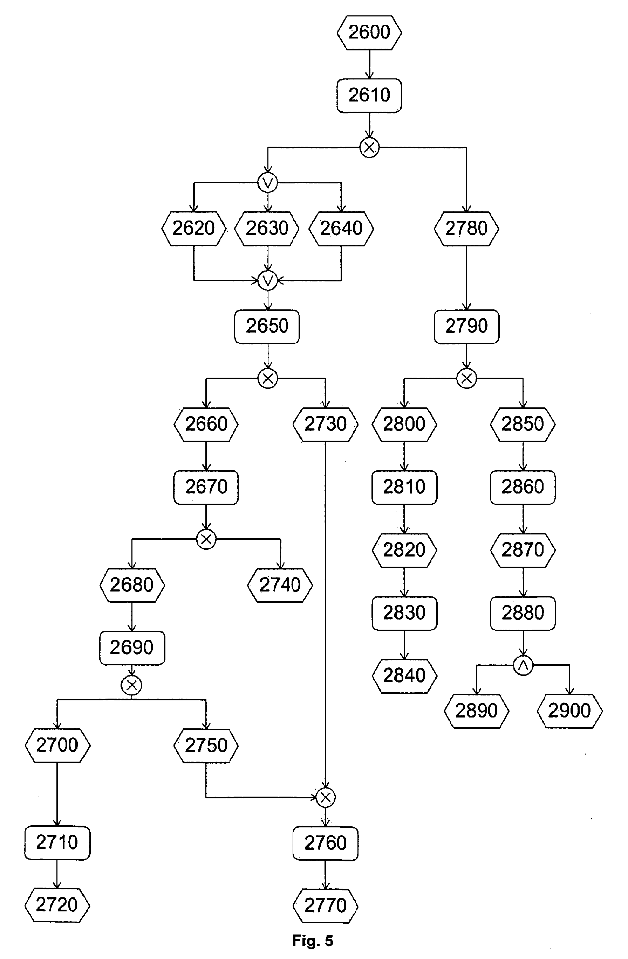

Figur 5 zeigt die Verfahrensschritte zur Überprüfung der Berechtigung zum Rücktransport.

Wurde der Rücktransport vom Zielort zum ersten Lager aufgrund des negativen Ergebnisses der Annahmekontrolle durch den Anfordernden ausgelöst, erfolgt ein Eingang des medizinischen Gutes im ersten Lager 2600.
Darauf hin wird das negative Ergebnis der Annahmekontrolle überprüft 2610.

Im Falle des unberechtigten Rücktransportes 2780 wird geprüft, ob das rückgesendete medizinische Gut bereits zuvor zurückgesendet wurde 2790. Hierbei wird eine Zahl y ermittelt, die die Anzahl an Rücktransporten pro medizinischem Gut wiedergibt. Diese Zahl wird ferner mit einer zuvor einmalig vom Apotheker oder Dienstleister festgelegten Schwellenzahl s verglichen.

Für den Fall, dass die Zahl y kleiner oder gleich der Schwellenzahl s ist 2800, wird die zum Transport gewählte Adresse des Zielortes mit der Adresse des Zielortes der Anforderung verglichen 2810. Stimmt die Adresse des Zielortes des Transportes mit der Adresse des Zielortes der Anforderung überein 2820, wird der erneute Transport des medizinischen Gutes zum Zielort veranlasst und ein Begleitschreiben dem medizinischen Gut beigefügt 2830. Der Verfahrensschritt 2840 beschreibt hierbei einen beendeten Transport zum Zielort.

Für den Fall, dass die Zahl y größer als die Schwellenzahl s ist 2850, wird ein Vermerk in die Kundendatei eingetragen 2870, wobei ein erneuter Transport des medizinischen Gutes unterbleibt 2880. Offene Posten 2890 bleiben bestehen und eine Gutschrift erfolgt nicht 2900. Gegebenenfalls wird ein Mahnwesen aktiviert.

Im Falle des berechtigten Rücktransportes wird geprüft, welches Kontrollkriterium das negative Ergebnis der Annahmekontrolle zu Recht ausgelöst hat. Beispielsweise folgen Prüfungen, ob das medizinische Gut verfallen ist 2620, ob das medizinische Gut versehrt ist 2630, oder ob ein fehlerhaftes medizinisches Gut transportiert wurde 2640.

Im Anschluss an die Prüfung des Kontrollkriteriums wird ermittelt 2650, welcher Wunsch des Anfordernden zum Rücktransport angegeben wurde. In dem Falle, dass der Umtausch des medizinischen Gutes gewünscht wird 2730, wird das medizinische Gut umgetauscht 2760. Der erfolgte Umtausch wird dokumentiert 2770.

In dem Falle, dass die Gutschrift gewünscht wird 2660, wird zunächst überprüft 2670, ob es sich bei der Anforderung, die zum Transport des rücktransportierten Gutes führte, um ein verschriebenes Arzneimittel 2740 oder um ein frei angefordertes Arzneimittel 2680 handelt. Handelt es sich um ein frei angefordertes Arzneimittel, wird der Softwareagent des Apothekers zur Abfrage einer Kulanz kontaktiert 2690. Wird die Kulanz gewährt 2700, erfolgt eine Veranlassung der Gutschrift 2710, so dass eine Gutschrift erfolgt 2720. Wird keine Kulanz gewährt 2750, wird das medizinische Gut umgetauscht 2760, wobei der erfolgte Umtausch dokumentiert 2770 wird.

Handelt es sich um verschriebenes Arzneimittel 2740, wird das medizinische Gut umgetauscht 2760, wobei der erfolgte Umtausch dokumentiert 2770 wird.

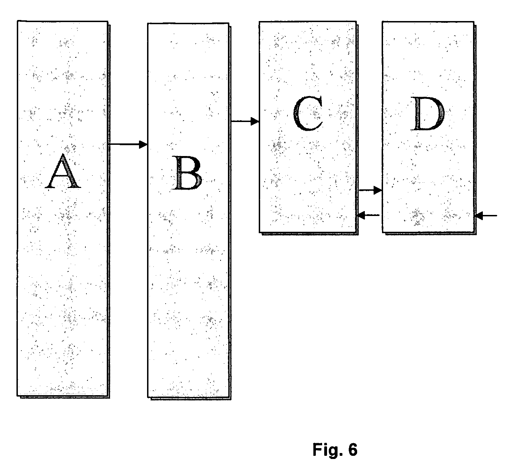

Figur 6 veranschaulicht den Zusammenhang zwischen einzelnen Funktionsbereichen des Ausführungsbeispiels. Dabei repräsentiert das mit dem Symbol A gekennzeichnete Rechteck die Funktionen der vorgenannten Bereiche der Erfassung der Anforderung, der Erzeugung des elektronischen Abbildes der erfassten Anforderung, der Identitätsprüfung, zu der auch eine Ermittlung der Adresse des Anfordernden gehört (s. a. Figur 1).
Wobei das mit dem Symbol B gekennzeichnete Rechteck die Funktionen der vorgenannten Bereiche der Bestimmung des medizinischen Gutes, der Prüfung der Kostenübernahme sowie der Festlegung des Transportweges repräsentiert (s. a. Figur 2).
Das mit dem Symbol C gekennzeichnete Rechteck repräsentiert die Funktionen der vorgenannten Bereiche der Prüfung des Güterbestandes sowie der Schritte zur Bereitstellung vorrätiger medizinischer Güter (s. a. Figur 3).

Das mit dem Symbol D gekennzeichnete Rechteck repräsentiert ferner die Funktionen der vorgenannten Bereiche der Güterbestandsprüfung sowie der Kommissionierung medizinischer Güter (s. a. Figur 4).
Das mit dem Symbol E gekennzeichnete Rechteck repräsentiert die Funktionen der vorgenannten Bereiche der Überprüfung der Berechtigung zum Rücktransport (s. a. Figur 5).

### Bezugszeichenliste

- **10**: Eingang der Verpackungseinheit
- **20**: Einleitung der Zuordnung zur Apotheke
- **30**: Zuordnung erfolgte
- **40**: Einleitung der Freilegung der Anforderung
- **50**: Freilegung der Anforderung erfolgte
- **60**: Einleitung der Sortierung nach Anfordernden
- **70**: Sortierung der Anforderung erfolgte
- **80**: Einleitung der Erzeugung des elektronischen Abbildes
- **90**: Erzeugung des elektronischen Abbildes erfolgte
- **100**: Einleitung der Auswertung
- **110**: Auswertung nicht möglich
- **120**: Einleitung der Auswertung durch den Softwareagenten des Apothekers
- **130**: Auswertung durch den Softwareagenten des Apothekers erfolgte
- **140**: Auswertung möglich
- **150**: Phonetische Überprüfung
- **160**: Phonetische Überprüfung erfolgte
- **170**: Einleitung des Dublettenchecks
- **180**: Dublettencheck erfolgte
- **190**: Identifikation des Anfordernden
- **200**: Anfordernde nicht in Adressdatenbank vermerkt
- **210**: Einleitung der Neuanlage der Daten des Anfordernden
- **220**: Neuanlage der Daten des Anfordernden erfolgte
- **230**: Einleitung der Verifikation der neu angelegten Daten / Ermittlung der Abweichung der erfassten Adressdaten vom Zielort
- **240**: Verifikation und Ermittlung erfolgte
- **250**: Überprüfung auf Einverständnis mit AGB's
- **260**: Kein Einverständnis
- **280**: Einverständnis liegt vor
- **320**: Überprüfung der Ortsqualität
- 330: Ortsqualität nicht OK / Einholung der Erteilung
- **340**: Ortsqualität OK
- **380**: Transport gegen Nachnahme
- **400**: Anfordernde identifiziert
- **410**: Einleitung der inhaltliche Überprüfung der Adressdaten/Zielort
- **420**: Inhaltliche Überprüfung erfolgte
- **430**: Einleitung der Zuweisung der Bestellnummer
- **440**: Zuweisung der Bestellnummer erfolgte
- **450**: Überprüfung des Alters der Anforderung
- **460**: Anforderung zu alt
- **470**: Alter OK
- **480**: Kontaktierung des Softwareagent des verschreibenden Arztes
- **490**: Keine Freigabe
- **500**: Freigabe erteilt
- **501**: Einleitung digitale Signatur
- **502**: Digitale Signatur erfolgte
- **510**: Anforderung mit Begleitschreiben an Anfordernden zurück / Abbruch der Bearbeitung
- **520**: Überprüfung auf Zulassung
- **530**: Arzt in Zulassungsliste aufgeführt
- **540**: Arzt nicht in Zulassungsliste aufgeführt
- **550**: Anforderung mit Begleitschreiben an Anfordernden zurück / Abbruch der Bearbeitung
- **560**: Einleitung der Identifizierung des medizinischen Gutes
- **570**: Einleitung der Ermittlung der Kunden- und Bestellnummer
- **580**: Ermittlung der Kunden- und Bestellnummer erfolgte
- **590**: Identifizierung des medizinischen Gutes erolgte
- **600**: Überprüfung der Plausibilität anhand der Kundendatei
- **610**: Keine Plausibilität
- **620**: Plausibilität OK
- **630**: Überprüfung der Plausibilität anhand der Anforderung
- **640**: Keine Plausibilität
- **650**: Plausibilität OK
- **660**: Kontaktierung Softwareagent des verschreibenden Arztes oder des Softwareagent des Anfordernden
- **670**: Änderungen am elektronischen Abbild nicht erforderlich
- **680**: Änderungen am elektronischen Abbild erforderlich
- **690**: Abbruch der Bearbeitung
- **700**: Einleitung der Änderungen am elektronischen Abbild / digitale Signatur
- **710**: Änderungen am elektronischen Abbild / digitale Signatur erfolgte
- **720**: Einleitung der Ermittlung der Kostenübernahme
- **730**: Anfordernde übernimmt keine Kosten
- **740**: Anfordernde übernimmt Kosten
- **750**: Ermittlung des Zahlungsweges
- **760**: Einleitung der Ermittlung des Preises
- **770**: Einleitung der Ermittlung des Transportweges
- **780**: Kein Mahn- oder Inkassoverfahren
- **790**: Mahn- oder Inkassoverfahren liegt vor
- **800**: Nachnahmezahlung liegt vor
- **810**: Einleitung der Zahlung per Nachnahme
- **820**: Entscheidung über Zahlungsweg
- **830**: Ermittlung des Preises erfolgte
- **840**: Ermittlung des Transportweges erfolgte
- **850**: Zahlung per Kreditkarte
- **860**: Zahlung per Lastschrift
- **870**: Zahlung per Rechnung
- **880**: Zahlung per Vorauskasse
- **890**: Zahlung per Scheck oder Bargeld
- **900**: Zahlung per Nachnahme
- **910**: Einleitung der Nachnahmeberechnung
- **920**: Nachnahmeberechnung erfolgte
- **930**: Unterbrechung der Bearbeitung bis Zahlungseingang erfolgt
- **940**: Zahlungseingang erfolgte
- **950**: Erstellung der Briefrechnung
- **960**: Zustellung der erstellten Briefrechnung
- **970**: Unterbrechung der Bearbeitung bis Zahlungseingang erfolgt
- **980**: Zahlungseingang erfolgte
- **990**: Überprüfung der Kontoverbindung
- **1000**: Kontoverbindung OK
- **1010**: Kontoverbindung nicht OK
- **1020**: Kontaktierung des Softwareagenten des Anfordernden
- **1030**: Kontoverbindung OK
- **1040**: Kontoverbindung nicht OK
- **1060**: Ermittlung Rechnungsbetrag
- **1070**: Rechnungsbetrag < x
- **1080**: Rechnungsbetrag ≥x
- **1090**: Überprüfung der Bonität
- **1100**: Vorlage des positiven Bonitätsvermerkes
- **1110**: Bonität nicht OK
- **1120**: Kontaktierung des Softwareagenten des Apothekers
- **1130**: Erteilung ohne Auflage
- **1140**: Erteilung unter Auflage
- **1150**: Abbruch der Bearbeitung
- **1160**: Überprüfung der Kreditkarte
- **1170**: Kreditkarte gültig
- **1180**: Kreditkarte ungültig
- **1190**: Einleitung der Zahlung per Nachnahme
- **1191**: Einleitung der Zahlung per Nachnahme erfolgte
- **1200**: Auftragbearbeitung
- **1210**: Überprüfung des Güterbestandes
- **1220**: Gut ist vorrätig
- **1230**: Einleitung der Bestandsreservierung des vorrätigen Gutes
- **1240**: Bestandsreservierung des vorrätigen Gutes erfolgte
- **1250**: Gut nicht vollständig vorrätig
- **1260**: Einleitung der Übermittlung von Informationen an den Softwareagenten des Versandapothekers
- **1270**: Übermittlung erfolgte
- **1280**: Überprüfung auf aut Idem Merkmal
- **1290**: Einverständniserklärung liegt vor
- **1300**: Einverständniserklärung liegt nicht vor
- **1310**: Kontaktierung des Softwareagenten des Apothekers
- **1320**: Transport des vorrätigen Gutes soll erfolgen
- **1330**: Transport des vorrätigen Gutes soll nicht erfolgen
- **1340**: Einleitung der Zurückstellung des reservierten vorrätigen Gutes
- **1350**: Reserviertes vorrätiges Gut wird zurückgestellt
- **1360**: Einleitung der Ermittlung ob echtes oder unechtes Factoring vorliegt
- **1370**: Ermittlung ob echtes oder unechtes Factoring vorliegt erfolgte
- **1380**: Einleitung der elektronische Vorbereitung
- **1390**: Anfordernde privat versichert
- **1400**: Erstellung der elektronischen Gesamtrechnung
- **1410**: Anfordernde gesetzlich versichert
- **1420**: Einleitung der Erstellung des Eigenanteils der Rechnung
- 1430: Einleitung der Erstellung des Kassenanteils der Rechnung
- **1440**: Erstellung des Kassenanteils der Rechnung erfolgte
- **1450**: Erstellung des Eigenanteils der Rechnung erfolgte
- **1460**: Rechnungsunterlagen zusammengestellt
- **1470**: Elektronische Vorbereitung der Abrechnungsunterlagen erfolgte
- **1480**: Elektronische Vorbereitung der Versandpapiere
- **1490**: Elektronische Vorbereitung des elektronischen Abbildes
- **1500**: Elektronische Vorbereitung des ermittelten Preises
- **1510**: Elektronische Vorbereitung der Versandscheine/Rechnung
- **1520**: Elektronische Vorbereitung der Aufkleber
- **1530**: Einleitung Übersendung an Apotheke
- **1540**: Übersendung an Apotheke erfolgte
- **1550**: Freigabe von der Logistik erhalten
- **2230**: Einleitung des elektronischen Empfangs der Versandpapiere
- **2240**: Der elektronische Empfang der Versandpapiere erfolgte
- **2250**: Einleitung der Auftragsvorbereitung
- **2260**: Druck der Versandpapiere
- **2270**: Aktivierung der Logistik
- **2280**: Ermittlung der Verpackungsart
- **2290**: Einleitung der Kommissionierung
- **2300**: Kommissionierung erfolgte
- **2310**: Einleitung der Überprüfung des elektronischen Abbildes
- **2320**: Überprüfung des elektronischen Abbildes erfolgte
- **2330**: Einleitung der Überprüfung des geänderten elektronischen Abbildes
- **2340**: Überprüfung des geänderten elektronischen Abbildes erfolgte
- **2350**: Einleitung der Überprüfung der Preisermittlung
- **2360**: Überprüfung der Preisermittlung erfolgte
- **2370**: Einleitung Überprüfung der Übereinstimmung
- **2380**: Überprüfung der Übereinstimmung erfolgte
- **2390**: Einleitung der digitalen Signatur der elektronischen Abbilder
- **2400**: Digitale Signatur der elektronischen Abbilder erfolgte
- **2410**: Ermittlung der Art der Krankenversicherung
- **2420**: Privatpatient
- **2430**: Einleitung des Ausdrucks des Rezeptes und Beifügung zu kommissioniertem Gut
- **2440**: Ausdrucks des Rezeptes und Beifügung zu kommissioniertem Gut erfolgte
- **2450**: Gesetzlich versichert
- **2460**: Einleitung des Sendens der Nachricht zur Abrechnung
- **2470**: Nachricht zur Abrechnung wurde gesendet
- 2480: Einleitung der Verpackung des medizinischen Gutes
- **2490**: Verpackung des medizinischen Gutes erfolgte
- **2500**: Einleitung der Ermittlung des Transportpreises
- **2510**: Ermittlung des Transportpreises erfolgte
- **2520**: Einleitung der Abrechnung mit dem Transporteur
- **2530**: Abrechnung mit dem Transporteur erfolgte
- **2540**: Lieferung der medizinisches Gut zum ersten Lager
- **2550**: Lieferung der medizinisches Gut zum ersten Lager erfolgte
- **2560**: Einleitung der Qualitätskontrolle
- **2570**: Qualitätskontrolle erfolgte
- **2580**: Einleitung der Lagerung des medizinischen Gutes
- **2590**: Lagerung des medizinischen Gutes erfolgte
- **2600**: Eingang des medizinischen Gutes im ersten Lager
- **2610**: Überprüfung des negativen Ergebnisses
- **2620**: Prüfungen, ob medizinische Gut verfallen
- **2630**: Prüfung, ob medizinische Gut beschädigt
- **2640**: Prüfung, ob falsches medizinisches Gut geliefert wurde
- **2650**: Ermittlung der weiteren Verfahrensweise
- **2660**: Gutschrift erwünscht
- **2670**: Überprüfung der Anforderung
- **2680**: Frei angefordertes Arzneimittel
- **2690**: Abfrage der Kulanz
- **2700**: Kulanz gewährt
- **2710**: Einleitung der Veranlassung der Gutschrift
- **2720**: Veranlassung der Gutschrift erfolgte
- **2730**: Umtausch erwünscht
- 2740: Verschriebenes Arzneimittel
- **2750**: Kulanz nicht gewährt
- **2760**: Einleitung des Umtausches des Gutes
- **2770**: Umtausches des Gutes erfolgte
- **2780**: Unberechtigter Rücktransport
- **2790**: Überprüfung der Anzahl der bereits erfolgten Rücktransporte
- **2800**: y ≤ s
- **2810**: Einleitung der Überprüfung der Adresse des Zielortes
- **2820**: Überprüfung der Adresse des Zielortes erfolgte
- **2830**: Einleitung des erneuter Transports
- **2840**: Erneuter Transport erfolgte
- **2850**: y > s
- **2860**: Einleitung der Eintragung des Vermerks in die Kundendatei
- **2870**: Eintragung des Vermerks in die Kundendatei erfolgte
- **2880**: Erneuter Transport unterbleibt
- **2890**: Offene Posten bleiben bestehen
- 2900: Gutschrift erfolgt nicht
- **5000**: Bearbeitungseinheit
- **7000**: Softwareagent des Apothekers

## Patentansprüche

1. Verfahren zur Bearbeitung mindestens einer Anforderung eines medizinischen Gutes, wobei das medizinische Gut ein Arzneimittel und/oder ein medizinisches Produkt ist, mit Mitteln zur Überprüfung von Güterbeständen sowie mit Mitteln zum Transport des medizinischen Gutes, wobei die Anforderung mindestens Daten eines Anfordernden und Adressdaten über einen Zielort des Transportes aufweist,
**dadurch gekennzeichnet,**
**dass** die Anforderung erfasst wird, dass ferner ein elektronisches Abbild der erfassten Anforderung erzeugt und gespeichert wird, dass die erfasste Anforderung und/oder das elektronische Abbild der erfassten Anforderung zur Bestimmung des medizinischen Gutes und ferner zur Identitätsprüfung eines Anfordernden des medizinischen Gutes ausgewertet werden, und dass für den Fall, dass sowohl die Identität des Anfordernden festgestellt werden kann als auch die Bestimmung des medizinischen Gutes möglich ist, eine Überprüfung erfolgt, ob das angeforderte medizinische Gut in einem vorgebbaren Güterbestand eines ersten Lagers vorrätig ist, wobei ein vorrätiges medizinisches Gut zum Transport bereitgestellt wird, und dass das bereitgestellte medizinische Gut und/oder ein elektronisches Abbild des bereitgestellten medizinischen Gutes mit dem elektronischen Abbild der erfassten Anforderung so zusammengeführt werden, dass eine Überprüfung einer Übereinstimmung zwischen dem bereitgestellten medizinischen Gut und dem angeforderten medizinischen Gut ermöglicht wird.

2. Verfahren nach Anspruch 1,
**dadurch gekennzeichnet,**
**dass** im Falle der Übereinstimmung zwischen dem bereitgestellten medizinischen Gut und dem angeforderten medizinischen Gut der Transport des bereitgestellten medizinischen Gutes zum Zielort sowie eine Kostenabrechnung erfolgen.

3. Verfahren nach Anspruch 2,
**dadurch gekennzeichnet,**
**dass** zur Kostenabrechnung das elektronische Abbild der erfassten Anforderung sowie eine Bestätigung des begonnenen Transportes übermittelt werden.

4. Verfahren nach einem oder mehreren der vorgenannten Ansprüche,
**dadurch gekennzeichnet,**
**dass** das elektronische Abbild der erfassten Anforderung und/oder das elektronische Abbild des bereitgestellten medizinischen Gutes mit mindestens einer digitalen Signatur versehen werden.

5. Verfahren nach einem oder mehreren der vorgenannten Ansprüche,
**dadurch gekennzeichnet,**
**dass** bei der Anforderung von mehr als einem medizinischen Gut die Überprüfung, ob das medizinische Gut im vorgebbaren Güterbestand des ersten Lagers vorrätig ist, für jedes angeforderte medizinische Gut erfolgt, wobei die vorrätigen angeforderten medizinischen Güter zum Transport bereitgestellt werden.

6. Verfahren nach einem oder mehreren der vorgenannten Ansprüche,
**dadurch gekennzeichnet,**
**dass** die Überprüfung des Güterbestandes des ersten Lagers zu einer Bestellung eines medizinischen Gutes führt, so dass der Transport des bestellten medizinischen Gutes von einem Zentrallager zum ersten Lager ausgelöst wird.

7. Verfahren nach einem oder mehreren der vorgenannten Ansprüche,
**dadurch gekennzeichnet,**
**dass** eine Qualitätskontrolle der medizinischen Güter des ersten Lagers erfolgt.

8. Verfahren nach einem oder mehreren der vorgenannten Ansprüche,
**dadurch gekennzeichnet, dass** ein Rücktransport vom Zielort zum ersten Lager im Falle eines negativen Ergebnisses einer Annahmekontrolle des Anfordernden ausgelöst wird.

9. Verfahren nach Anspruch 8,
**dadurch gekennzeichnet,**
**dass** nach erfolgtem Rücktransport des medizinischen Gutes eine weitere Überprüfung ausgelöst wird, wobei mittels des rücktransportierten medizinischen Gutes überprüft wird, ob eine Berechtigung zum Rücktransport vorliegt.

10. Verfahren nach einem oder mehreren der vorgenannten Ansprüche,
**dadurch gekennzeichnet,**
**dass** eine Sendungsverfolgung des medizinischen Gutes durch eine Abfrage eines Identifikationscodes erfolgt.
